# EUROPEAN PATENT SPECIFICATION

(11) **EP 3 093 842 B1**
(45) Date of publication and mention of the grant of the patent: **07.06.2023**
(21) Application number: 14876420.2
(22) Date of filing: 24.12.2014
(51) Int. Cl.: G06F 3/16, G10L 15/22, H04M 3/493, G10L 15/30, G06F 16/332, H04M 1/724

(54) **TERMINAL DEVICE, PROGRAM, AND SERVER DEVICE FOR PROVIDING INFORMATION ACCORDING TO USER DATA INPUT**
ENDGERÄTEVORRICHTUNG, PROGRAMM UND SERVERVORRICHTUNG ZUR BEREITSTELLUNG VON INFORMATIONEN ENTSPRECHEND EINER BENUTZERDATENEINGABE
DISPOSITIF TERMINAL, PROGRAMME ET DISPOSITIF SERVEUR POUR FOURNIR DES INFORMATIONS SELON UNE SAISIE DE DONNÉES UTILISATEUR

(30) Priority: 06.01.2014 JP 2014000415
(43) Date of publication of application: 16.11.2016
(73) Proprietor: NTT DOCOMO, INC., Chiyoda-ku Tokyo 100-6150 (JP)
(72) Inventor: KURISU, Toshiharu, Tokyo 100-6150 (JP); TSUGE, Yuki, Tokyo 100-6150 (JP)
(74) Representative: Hoffmann Eitle
(86) International application number: PCT/JP2014/084044
(87) International publication number: WO 2015/102082

(56) References cited:
- WO-A1-2010/141802
- WO-A2-2007/055766
- JP-A- 2010 128 144
- JP-A- 2010 254 437
- US-A1- 2012 265 528
- US-B1- 6 665 640

## Description

### Technical Field

The present invention relates to a mechanism for providing a user with information in accordance with the user's data input to a terminal apparatus.

### Background Art

There is a mechanism for enabling a terminal apparatus to execute processing conforming to an instruction that is issued by its user by speech (hereinafter, this mechanism is referred to as "speech agent system").

For example, Non-Patent Literature 1 introduces examples of tasks carried out by a speech agent system. One of them is a task to cause a smartphone to display information of taxi companies that can dispatch a taxi to the current location of a user in response to a speech made by the user into the smartphone: "Search for a taxi around here!"

US 2012/265528 A1 describes a virtual assistant uses context information to supplement natural language or gestural input from a user. Context helps to clarify the user's intent and to reduce the number of candidate interpretations of the user's input, and reduces the need for the user to provide excessive clarification input. Context can be used to constrain solutions during speech recognition. The context may comprise the user's current location.

JP2010 128144 A describes a speech recognition apparatus and program that prompts the user input to allowable speech recognition results by displaying candidate input words.

### Citation List

### Non-Patent Literature

Non-Patent Literature 1: NTT DOCOMO, Inc. What you can do with Shabette Concier. Retrieved October 18, 2013, from http://www.nttdocomo.co.jp/service/information/shabette_concier/feature/index. html

### Summary

### Technical Problem

A speech agent system enables a user to instruct a terminal apparatus to execute desired processing by speech. Generally, it takes less effort to issue an instruction by speech (hereinafter referred to as "speech instruction") than to issue an instruction by character input and the like. However, a user who is unfamiliar with a speech instruction may not know what kind of speech he/she should make to cause a terminal apparatus to accurately execute processing conforming to an instruction. Even a user who is familiar with a speech instruction may not instantly come up with the content of a desirable speech directed to an instruction for processing that he/she desires.

In view of the foregoing issues, an object of the present invention is to alleviate difficulty experienced by a user when issuing a speech instruction.

### Solution to Problem

This object is accomplished by the subject matter of the independent claims. The dependent claims concern particular embodiments. In particular, the object is achieved by a terminal apparatus according to claim 1, a server apparatus according to claim 4, and a program according to claim 9.

### Effects of Invention

The present invention prompts a user to issue a speech instruction corresponding to an attribute of the user or an attribute of the environment surrounding the user when a predetermined period elapses without issuance of a speech instruction by the user since the terminal apparatus started to wait for the speech instruction by the user. The user can think about the content of a speech with reference to the content of the prompt. This alleviates difficulty experienced by the user when issuing a speech instruction.

### Brief Description of Drawings

FIG. 1 shows an overall configuration of a speech agent system according to an embodiment.
FIG. 2 shows hardware components of a terminal apparatus according to an embodiment.
FIG. 3 shows functional components of a terminal apparatus according to an embodiment.
FIG. 4 shows hardware components of a server apparatus according to an embodiment.
FIG. 5 shows functional components of a server apparatus according to an embodiment.
FIG. 6 shows a structure of an attribute database used by a server apparatus according to an embodiment.
FIG. 7 shows a structure of a synonym database used by a server apparatus according to an embodiment.
FIG. 8 shows a structure of a relevance database used by a server apparatus according to an embodiment.
FIG. 9 shows a structure of a log database used by a server apparatus according to an embodiment.
FIG. 10A exemplarily shows a screen displayed on a display of a terminal apparatus according to an embodiment.
FIG. 10B exemplarily shows a screen displayed on a display of a terminal apparatus according to an embodiment.
FIG. 10C exemplarily shows a screen displayed on a display of a terminal apparatus according to an embodiment.
FIG. 11A exemplarily shows a screen displayed on a display of a terminal apparatus according to an embodiment.
FIG. 11B exemplarily shows a screen displayed on a display of a terminal apparatus according to an embodiment.
FIG. 11C exemplarily shows a screen displayed on a display of a terminal apparatus according to an embodiment.
FIG. 11D exemplarily shows a screen displayed on a display of a terminal apparatus according to an embodiment.
FIG. 12 shows a sequence of processes executed by a speech agent system according to an embodiment.
FIG. 13 shows a structure of an instruction sentence list used by a server apparatus according to an embodiment.
FIG. 14A exemplarily shows a screen displayed on a display of a terminal apparatus according to a modification example.
FIG. 14B exemplarily shows a screen displayed on a display of a terminal apparatus according to a modification example.
FIG. 14C exemplarily shows a screen displayed on a display of a terminal apparatus according to a modification example.
FIG. 15 shows a structure of an inter-processing relevance database used by a server apparatus according to a modification example.
FIG. 16 shows a structure of a model sentence database used by a server apparatus according to a modification example.
FIG. 17 shows functional components of a terminal apparatus according to a modification example.
FIG. 18 shows functional components of a server apparatus according to a modification example.
FIG. 19 shows a sequence of processes executed by a speech agent system according to a modification example.
FIG. 20A exemplarily shows a screen displayed on a display of a terminal apparatus according to a modification example.
FIG. 20B exemplarily shows a screen displayed on a display of a terminal apparatus according to a modification example.
FIG. 20C exemplarily shows a screen displayed on a display of a terminal apparatus according to a modification example.
FIG. 20D exemplarily shows a screen displayed on a display of a terminal apparatus according to a modification example.
FIG. 20E exemplarily shows a screen displayed on a display of a terminal apparatus according to a modification example.

### Reference Signs List

- 1: speech agent system
- 11: terminal apparatus
- 12: server apparatus
- 19: communication network
- 101: memory
- 102: processor
- 103: communication IF
- 104: touch display
- 105: microphone
- 106: clock
- 107: GPS unit
- 109: bus
- 111: attribute acquisition unit
- 112: transmission unit
- 113: sentence acquisition unit
- 114: display control unit
- 115: speech data acquisition unit
- 116: processing ID acquisition unit
- 117: processing execution unit
- 121: reception unit
- 122: speech recognition unit
- 123: processing ID generation unit
- 124: transmission unit
- 125: storage control unit
- 126: timer unit
- 127: sentence acquisition unit
- 201: memory
- 202: processor
- 203: communication IF
- 209: bus
- 321: relevance data acquisition unit
- 1041: display
- 1042: touchscreen

### Description of Embodiments

### [Embodiment]

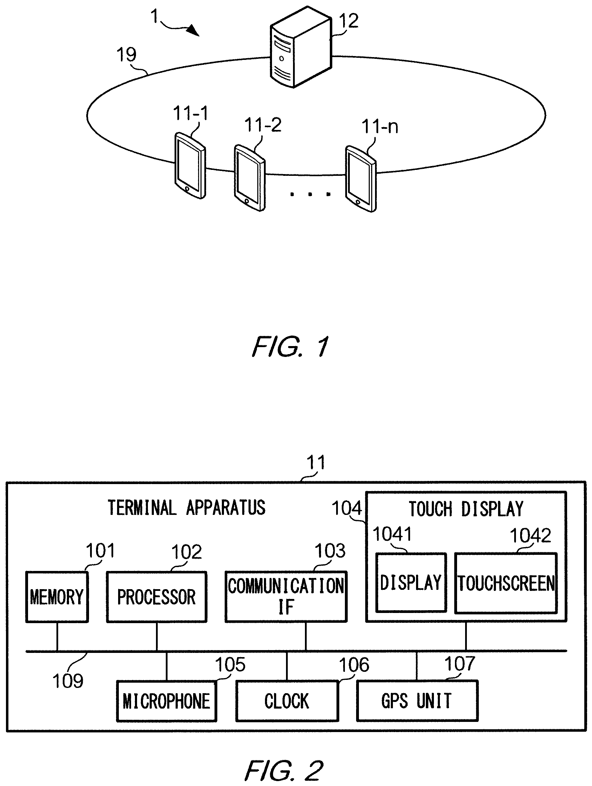

The following describes speech agent system 1 according to an embodiment of the present invention. FIG. 1 shows an overall configuration of speech agent system 1. Speech agent system 1 includes terminal apparatuses 11-1 to 11-n carried by users, and server apparatus 12. The number n of terminal apparatuses 11-1 to 11-n changes arbitrarily in accordance with the number of users who use speech agent system 1. Hereinafter, any of terminal apparatuses 11-1 to 11-n is referred to as "terminal apparatus 11" when it need not be distinguished from the rest of terminal apparatuses 11-1 to 11-n. When a user has issued a speech instruction to terminal apparatus 11, server apparatus 12 interprets the meaning of the user's speech, and instructs terminal apparatus 11 to execute necessary processing. Although server apparatus 12 is depicted as a single apparatus in FIG. 1, server apparatus 12 may be composed of, for example, a plurality of apparatuses acting in coordination with one another. Terminal apparatus 11 and server apparatus 12 can perform data communication with each other via communication network 19.

Terminal apparatus 11 includes the same hardware components as, for example, an ordinary slate personal computer equipped with a touch display. Alternatively, terminal apparatus 11 may be any of other types of computers. FIG. 2 shows hardware components of a slate personal computer as exemplary hardware components of terminal apparatus 11. Terminal apparatus 11 exemplarily shown in FIG. 2 includes memory 101, processor 102, communication interface (IF) 103, touch display 104, microphone 105, clock 106, and global positioning system (GPS) unit 107 as hardware components. These components are connected to one another via bus 109.

Memory 101 is a storage apparatus including a volatile semiconductor memory, a non-volatile semiconductor memory, and the like. It stores an operation system (OS), application programs, and various types of data, such as user data, and is used as a working area for data processes executed by processor 102. Processor 102 is a processing apparatus, such as a central processing unit (CPU) and a graphics processing unit (GPU). Communication IF 103 is an interface that performs various types of wireless data communication with server apparatus 12 via communication network 19.

Touch display 104 includes display 1041 and touchscreen 1042. Display 1041 is a display apparatus, such as a liquid crystal display, and displays characters, graphics, photographs, and the like. Touchscreen 1042 is, for example, a capacitive touchscreen. It is an input device that, when a finger or a similar pointer has touched or become adjacent to the input device, accepts a user operation by specifying the position of the touch or adjacency. In the following description, the touch or adjacency is simply referred to as "touch" for the sake of convenience.

Display 1041 and touchscreen 1042 are stacked. When the user touches an image displayed on display 1041 with the pointer, the pointer actually touches touchscreen 1042, and the position of the touch is specified. In conformity to the OS and application programs, processor 102 specifies the content of an operation intended by the user's touch with the pointer based on the position specified by touchscreen 1042.

Microphone 105 is a sound pickup apparatus that picks up sound and generates sound data. In speech agent system 1, microphone 105 picks up the user's speech and generates speech data. Clock 106 is an apparatus that continuously measures a period elapsed since reference time, and generates time data indicating the current time. GPS unit 107 is an apparatus that receives signals from a plurality of satellites, specifies the current position of terminal apparatus 11 (that is to say, the current position of the user) based on the received signals, and generates position data indicating the specified position.

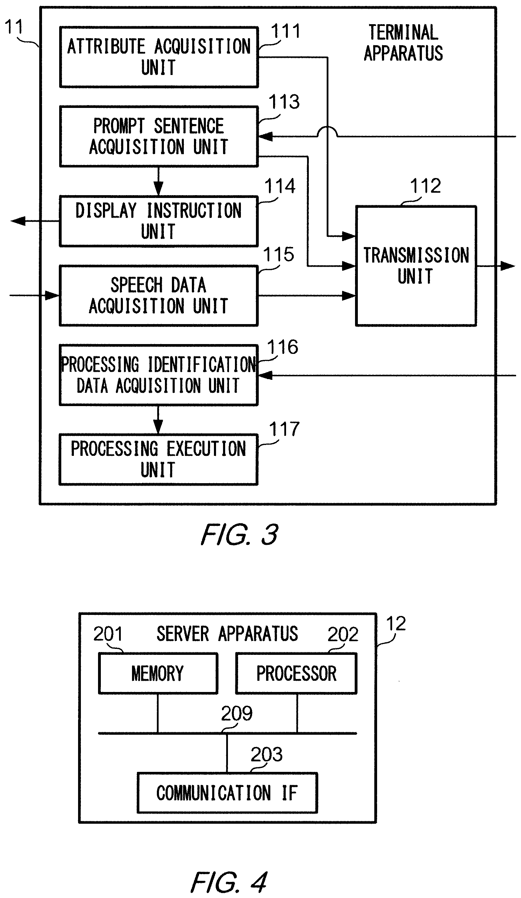

In terminal apparatus 11 including the foregoing hardware components, processor 102 executes processes conforming to the programs stored in memory 101. As a result, terminal apparatus 11 acts as an apparatus including functional components shown in FIG. 3.

Terminal apparatus 11 includes attribute acquisition unit 111, transmission unit 112, sentence acquisition unit 113, display control unit 114, speech data acquisition unit 115, processing ID acquisition unit 116, and processing execution unit 117 as functional components.

Attribute acquisition unit 111 acquires attribute data indicating the attributes of the user of terminal apparatus 11 or the attributes of the environment surrounding the user. In the present embodiment, data indicating the gender, age, and current position of the user and the current time is used as the attribute data by way of example. The gender and age of the user are examples of the attributes of the user, whereas the current position of the user and the current time are examples of the attributes of the environment surrounding the user. Data indicating the gender and age of the user is input to terminal apparatus 11 by a user operation using, for example, touchscreen 1042, and attribute acquisition unit 111 acquires the data thus input by the user. On the other hand, attribute acquisition unit 111 acquires, for example, position data generated by GPS unit 107 as data indicating the current position of the user. In the present embodiment, data indicating the current time (time data) is generated by server apparatus 12 for use, and hence attribute acquisition unit 111 need not acquire time data.

Transmission unit 112 transmits the attribute data acquired by attribute acquisition unit 111 to server apparatus 12. Transmission unit 112 also transmits speech data acquired by speech data acquisition unit 115 to server apparatus 12.

Suggestion sentence acquisition unit 113 acquires prompt sentence data, which indicates a sentence prompting the user of terminal apparatus 11 to issue a speech instruction, by receiving the prompt sentence data from server apparatus 12. Display instruction unit 114 instructs display 1041 to display the sentence indicated by the prompt sentence data acquired by sentence acquisition unit 113.

Speech data acquisition unit 115 acquires, from microphone 105, speech data indicating a speech that has been made by the user and picked up by microphone 105. Transmission unit 112 described above transmits the speech data acquired by speech data acquisition unit 115 to server apparatus 12. Processing identification data acquisition unit 116 acquires processing identification data that is transmitted from server apparatus 12 in reply to the speech data transmitted from transmission unit 112. The processing identification data acquired by processing ID acquisition unit 116 identifies processing corresponding to an instruction indicated by the speech data transmitted from transmission unit 112 to server apparatus 12. In the present embodiment, the processing identification data identifies processing using a combination of a function ID identifying a function and a parameter specifying specific processing of the function by way of example.

Processing execution unit 117 executes the processing identified by the processing identification data acquired by processing ID acquisition unit 116.

Components of server apparatus 12 will now be described. Server apparatus 12 has the same hardware components as an ordinary computer that can perform data communication with an external apparatus via communication network 19. FIG. 4 shows hardware components of server apparatus 12. Specifically, server apparatus 12 includes memory 201, processor 202, and communication IF 203 as hardware components. These components are connected to one another via bus 209.

Memory 201 is a storage apparatus including a volatile semiconductor memory, a non-volatile semiconductor memory, and the like. It stores an OS, application programs, and various types of data, such as user data, and is used as a working area for data processes by processor 202. Processor 202 is a processing apparatus, such as a CPU and a GPU. Communication IF 203 is an interface that performs various types of data communication with other apparatuses via communication network 19.

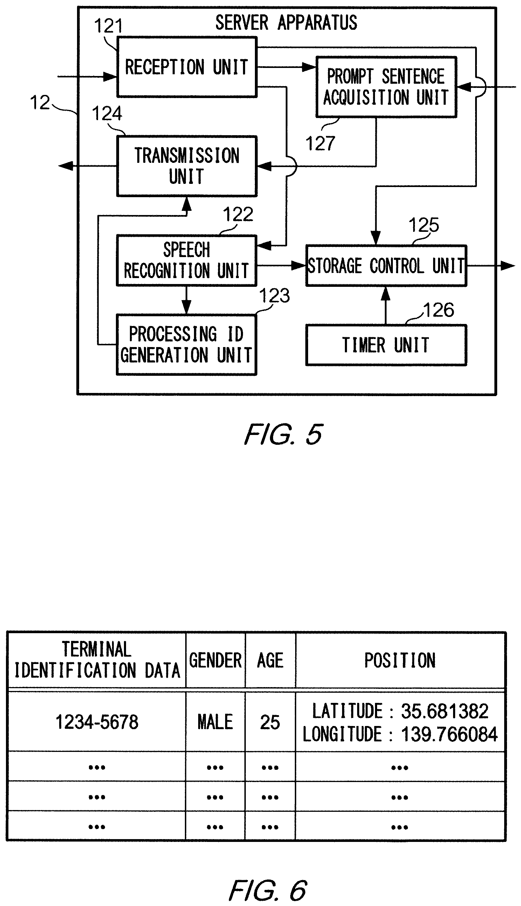

Server apparatus 12 acts as an apparatus including functional components shown in FIG. 5 by executing processes conforming to the programs stored in memory 201. Server apparatus 12 includes reception unit 121, speech recognition unit 122, processing ID generation unit 123, transmission unit 124, storage control unit 125, timer unit 126, and sentence acquisition unit 127 as functional components.

Reception unit 121 receives attribute data transmitted from each of terminal apparatuses 11. Reception unit 121 also receives speech data transmitted from each of terminal apparatuses 11.

Speech recognition unit 122 recognizes an instruction indicated by the speech data received by reception unit 121 through a known speech recognition process, and generates instruction sentence data indicating a sentence of the recognized instruction. Processing ID generation unit 123 generates processing identification data that identifies processing corresponding to the instruction sentence data generated by speech recognition unit 122.

Transmission unit 124 transmits the processing identification data generated by processing ID generation unit 123 to terminal apparatus 11 that transmitted the speech data used to generate the processing identification data. Transmission unit 124 also transmits prompt sentence data acquired by sentence acquisition unit 127 to terminal apparatus 11 that transmitted attribute data used to acquire the prompt sentence data.

Storage control unit 125 causes memory 201 to store the following items in association with one another: attribute data received by reception unit 121 from one of terminal apparatuses 11, instruction sentence data that has been generated by speech recognition unit 122 using speech data received by reception unit 121 from the same terminal apparatus 11, and time data (generated by timer unit 126) indicating the time of issuance of an instruction indicated by the instruction sentence data.

Timer unit 126 generates time data indicating the current time. Suggestion sentence acquisition unit 127 acquires prompt sentence data corresponding to the attributes indicated by attribute data received by reception unit 121 from one of terminal apparatuses 11 by generating the prompt sentence data using such data as pieces of attribute data that have been received from various terminal apparatuses 11 and stored in memory 201, and pieces of instruction sentence data stored in memory 201 in association with such pieces of attribute data.

A structure of data stored in terminal apparatus 11 and server apparatus 12 will now be described. Memory 101 of terminal apparatus 11 stores terminal identification data that identifies terminal apparatus 11, and data indicating the gender and age of the user. The terminal identification data is acquired from server apparatus 12 when, for example, terminal apparatus 11 activates a program according to the present embodiment for the first time. The data indicating the gender and age of the user is, for example, input by the user with the use of touchscreen 1042.

Memory 201 of server apparatus 12 stores an attribute database, a synonym database, a relevance database, and a log database. The attribute database manages attribute data of the user of terminal apparatus 11. The synonym database manages synonym data indicating a correspondence relationship between a basic keyword (base keyword) and a keyword that is synonymous with the base keyword (synonymous keyword). The relevance database manages relevance data indicating the magnitudes of relevance between various keywords and various functions. The log database manages log data related to a speech instruction issued by the user of terminal apparatus 11.

FIG. 6 shows an exemplary structure of the attribute database. The attribute database is a collection of records corresponding to terminal apparatuses 11, and has [terminal identification data], [gender], [age], and [position] as data fields. Hereinafter, [(data field name)] denotes a data field specified by the data field name. In these fields, data corresponding to their field names is stored. Data transmitted from terminal apparatus 11 to server apparatus 12 is stored into [terminal identification data], [gender], and [age] at an appropriate timing, such as when terminal apparatus 11 activates the program according to the present embodiment for the first time. [Age] is updated as needed. [Position] is frequently updated based on position data transmitted from terminal apparatus 11 to server apparatus 12 at an appropriate timing, such as when terminal apparatus 11 enters a state in which it waits for a speech instruction (described later).

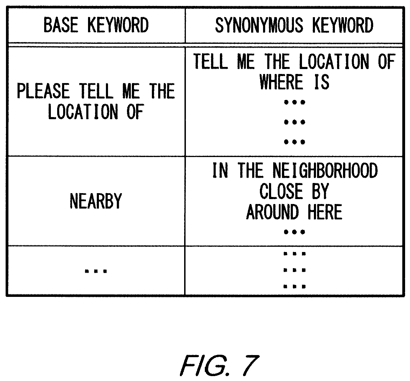

FIG. 7 shows an exemplary structure of the synonym database. The synonym database is a collection of records corresponding to various base keywords, and has [base keyword] and [synonymous keyword] as data fields. Hereinafter, [(data field name)] denotes a data field specified by the data field name. In each data field, data corresponding to its data field name is stored. Note that the number of synonymous keywords associated with one base keyword varies.

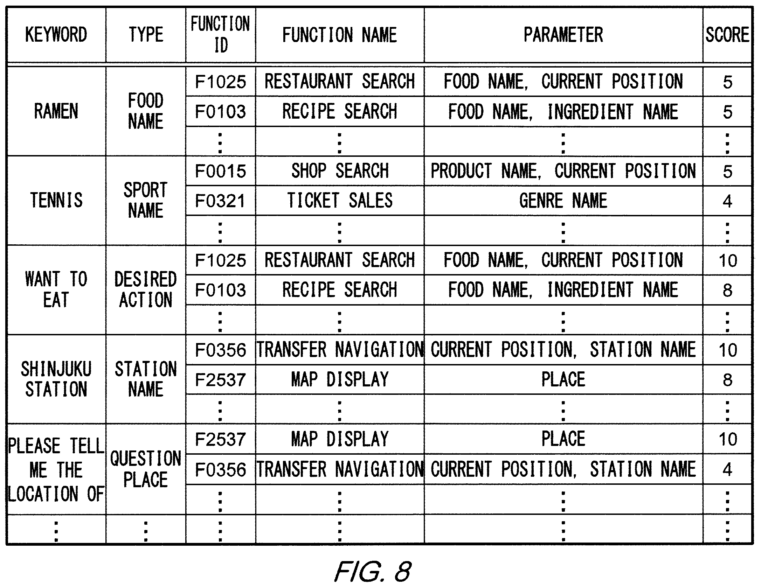

FIG. 8 shows an exemplary structure of the relevance database. The relevance database is a collection of records corresponding to keywords, and has [keyword], [type], [function ID], [function name], [parameter], and [score] as data fields.

In [keyword], text data indicating a keyword (one of the base keywords stored in the synonym database) is stored. Text data indicating a type(s) of a keyword is stored in [type]. For example, in FIG. 8, "food name" is stored in [type] of the first record as a type of a keyword "ramen."

A function ID that identifies a function is stored in [function ID]. Text data indicating a name of a function is stored in [function name]. Hereinafter, an individual function is referred to as a function "(function name)."

Text data indicating a type of a parameter used for a function is stored in [parameter]. For example, in FIG. 8, data represented by "food name, current position" stored in [parameter] of the first record indicates that a keyword with a type "food name" and the current position are used for a function "restraint search."

A score representing numeric data indicating a magnitude of relevance between a keyword and a function is stored in [score]. Note that each record in the relevance database can store a plurality of sets of data in [function ID], [function name], [parameter], and [score].

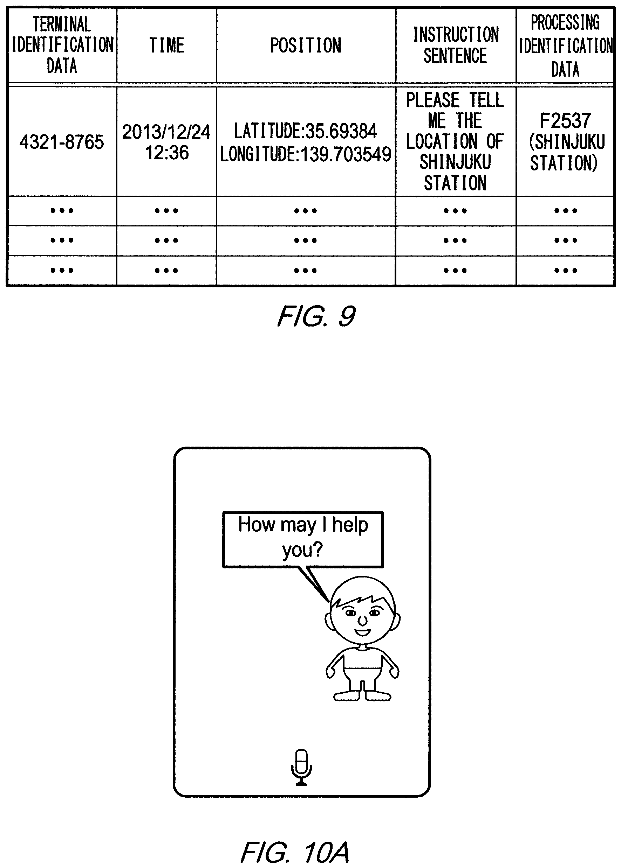

FIG. 9 shows an exemplary structure of the log database. The log database is a collection of records corresponding to speech instructions issued by the users of various terminal apparatuses 11, and has [terminal identification data], [time], [position], [instruction sentence], and [processing identification data] as data fields. Terminal identification data of terminal apparatus 11 that transmitted speech data indicating a speech instruction is stored in [terminal identification data]. Data indicating the time of issuance of a speech instruction is stored in [time]. Data indicating the position of a user (i.e., terminal apparatus 11) at the time of issuance of a speech instruction is stored in [position]. Instruction sentence data indicating a sentence of an instruction indicated by speech data is stored in [instruction sentence]. Processing identification data that identifies processing corresponding to a speech instruction is stored in [processing identification data].

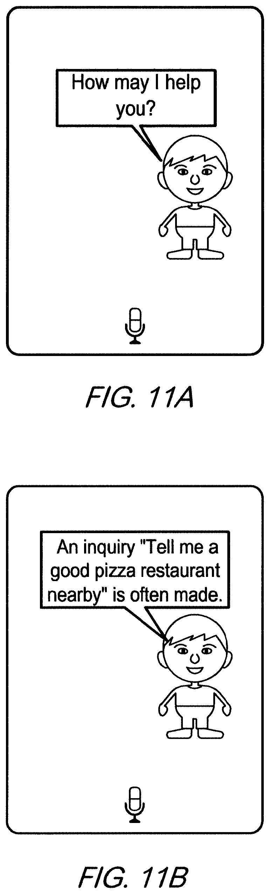

The following describes tasks carried out by speech agent system 1 with the foregoing components. FIGS. 10A to 10C and 11A to 11D exemplarily show screens displayed on display 1041 of terminal apparatus 11 when a user issues a speech instruction in speech agent system 1. FIGS. 10A to 10C show a transition of screens displayed on display 1041 when the user issues a speech instruction before the elapse of a predetermined period (e.g., 10 seconds) since terminal apparatus 11 started to wait for the speech instruction by the user. On the other hand, FIGS. 11A to 11D show a transition of screens displayed on display 1041 when the predetermined period elapses without issuance of a speech instruction by the user since terminal apparatus 11 started to wait for the speech instruction by the user.

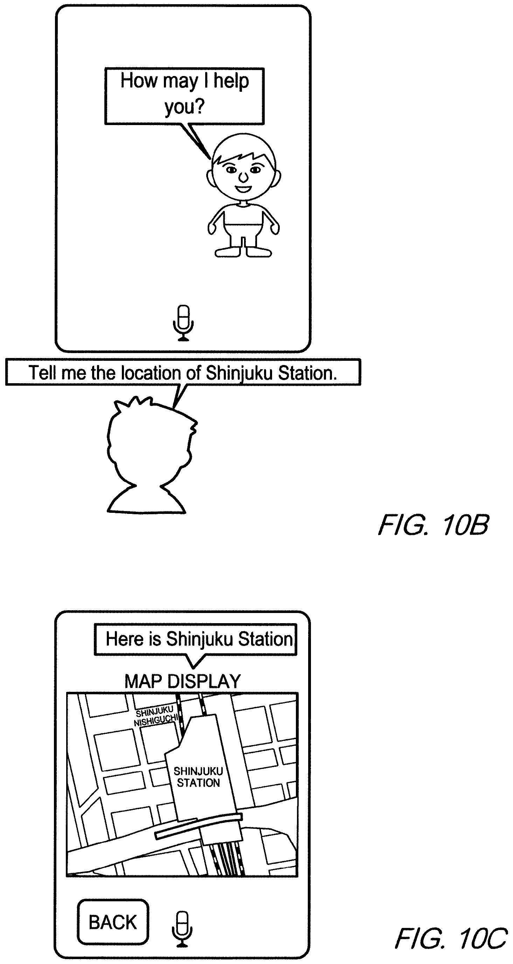

FIG. 10A shows a dialogue screen displayed on display 1041 while waiting for a speech instruction by the user. During the wait state, the dialogue screen displays, for example, a sentence "How may I help you?" as a prescribed prompt sentence that prompts the user to issue a speech instruction. If the user issues a speech instruction during display of the dialogue screen on display 1041 as shown in FIG. 10B, terminal apparatus 11 executes processing corresponding to the speech instruction, and a screen corresponding to the speech instruction (processing execution screen) is displayed on display 1041 as shown in FIG. 10C.

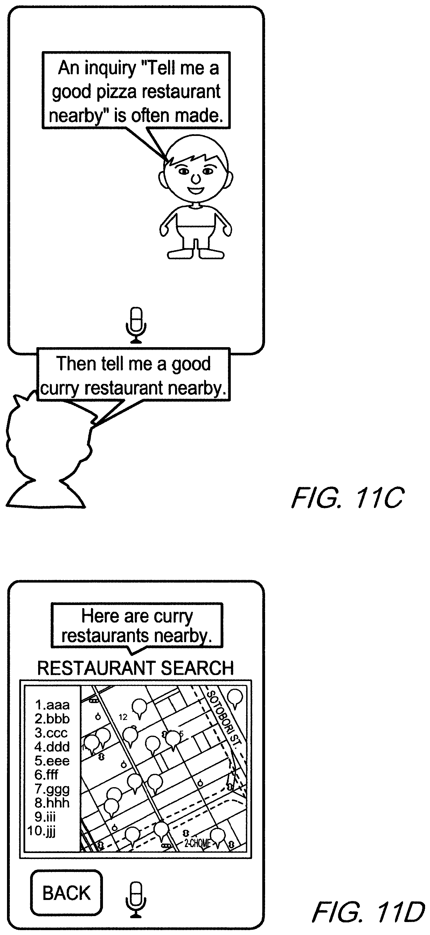

FIG. 11A shows a dialogue screen for the wait state, similarly to FIG. 10A. If the predetermined time period (e.g., 10 seconds) has elapsed without issuance of a speech instruction by the user since the start of display of the dialogue screen for the wait state, a new prompt sentence that prompts the user to issue a speech instruction is displayed on display 1041 as shown in FIG. 11B. This prompt sentence is generated in accordance with the gender and age of the user of terminal apparatus 11 (the attributes of the user), as well as the current position of the user and the current time (the attributes of the environment surrounding the user). Therefore, there is a high possibility that this prompt sentence has something in common with the content of a speech instruction that the user wishes to issue. If the user issues a speech instruction as shown in FIG. 11C, terminal apparatus 11 executes processing corresponding to the speech instruction, and a processing execution screen corresponding to the speech instruction is displayed on display 1041 as shown in FIG. 11D.

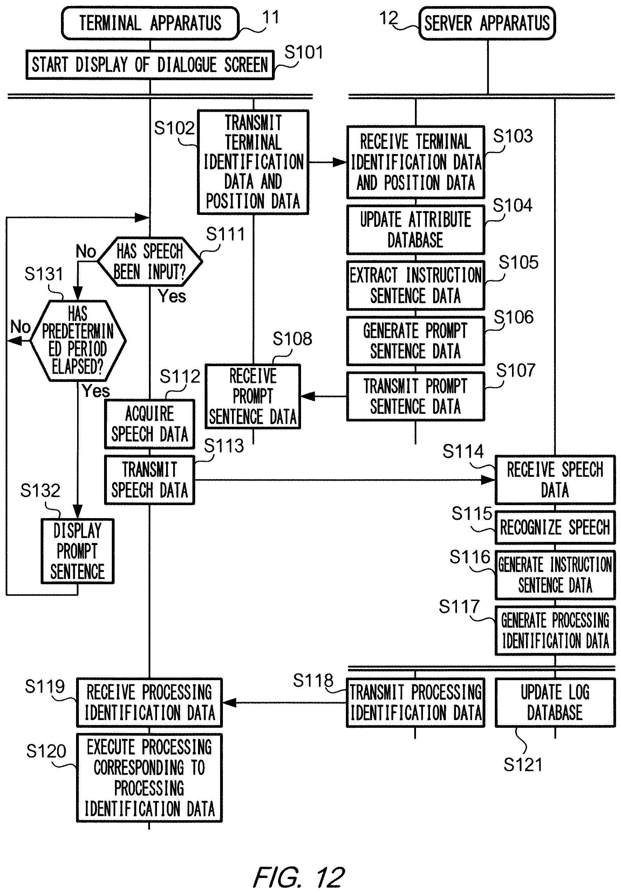

FIG. 12 shows a sequence of processes executed by speech agent system 1 when the user issues a speech instruction. The following describes processes executed by speech agent system 1 with reference to FIG. 12.

First, when the user performs a predetermined operation on terminal apparatus 11, display control unit 114 of terminal apparatus 11 causes display 1041 to display a dialogue screen for the wait state (FIG. 10A or FIG. 11A) (step S101). With the start of the wait state, attribute acquisition unit 111 of terminal apparatus 11 acquires position data indicating the current position of terminal apparatus 11 (i.e., the current position of the user) from GPS unit 107. Transmission unit 112 transmits the position data acquired by attribute acquisition unit 111, together with terminal identification data stored in memory 101, to server apparatus 12 (step S102).

The communication connection established between terminal apparatus 11 and server apparatus 12 is maintained during display of the dialogue screen on display 1041. Once server apparatus 12 identifies terminal apparatus 11 upon establishment of the communication connection, it can thereafter keep identifying terminal apparatus 11 via the communication connection until the communication connection is dissolved. Therefore, after terminal apparatus 11 transmits the terminal identification data to server apparatus 12 in step S102, it need not re-transmit the terminal identification data to server apparatus 12 in the processes described below.

Reception unit 121 of server apparatus 12 receives the terminal identification data and the position data transmitted from terminal apparatus 11 (step S103). Storage control unit 125 reads out the attribute database (FIG. 6) from memory 201, and stores (by overwriting) the position data received by reception unit 121 in [position] of a record that stores the terminal identification data received by reception unit 121 in step S103 in [terminal identification data]. Storage control unit 125 causes memory 201 to store the attribute database thus updated (step S104).

After step S104, the processes of steps S105 to S108 are continuously executed. As a part of data used in these processes is generated in the processes of steps S111 to S121 described below, steps S111 to S121 will now be described first.

With the start of the wait state, speech data acquisition unit 115 of terminal apparatus 11 waits for output of speech data indicating the user's speech from microphone 105, in parallel with the process of step S102. If the user issues a speech instruction ("Yes" of step S111), microphone 105 outputs the speech data, and speech data acquisition unit 115 acquires the speech data (step S112). Transmission unit 112 transmits the speech data acquired by speech data acquisition unit 115 to server apparatus 12 (step S113).

When reception unit 121 of server apparatus 12 receives the speech data transmitted from terminal apparatus 11 (step S114), speech recognition unit 122 recognizes the content of the speech indicated by the speech data, and generates spoken sentence data indicating a sentence of the recognized content (instruction sentence data indicating an instruction sentence prior to synonym conversion) (step S115). For instance, if the user issues a speech instruction "Tell me the location of Shinjuku Station" as exemplarily shown in FIG. 10B, speech recognition unit 122 generates spoken sentence data indicating a sentence "Tell me the location of Shinjuku Station."

Subsequently, processing ID generation unit 123 converts a keyword (synonymous keyword) contained in the sentence indicated by the spoken sentence data generated by speech recognition unit 122 into a base keyword in conformity to synonym data stored in the synonym database (FIG. 7), and generates instruction sentence data indicating the converted sentence (instruction sentence) (step S116). For example, assume that spoken sentence data indicating a sentence "Tell me the location of Shinjuku Station" is generated in step S115. In this case, a synonymous keyword "Tell me the location of' is converted into a base keyword "Please tell me the location of," and instruction sentence data indicating a sentence "Please tell me the location of Shinjuku Station" is generated in step S116.

Subsequently, processing ID generation unit 123 specifies processing corresponding to the instruction sentence indicated by the instruction sentence data generated in step S116, and generates processing identification data that identifies the specified processing (step S117). Specifically, processing ID generation unit 123 first extracts keywords contained in the instruction sentence indicated by the instruction sentence data. Subsequently, for each of the extracted keywords, processing ID generation unit 123 extracts a record that stores the keyword in [keyword] from the relevance database (FIG. 8). Subsequently, for each of function IDs stored in [function ID] of one or more records that have been extracted, processing ID generation unit 123 obtains a sum total of the scores stored in [score].

For example, assume that instruction sentence data indicating a sentence "Please tell me the location of Shinjuku Station" is generated in step S116. In this case, processing ID generation unit 123 extracts "Please tell me the location of" and "Shinjuku Station" as keywords. Subsequently, processing ID generation unit 123 extracts, from the relevance database, a record that stores "Shinjuku Station" in [keyword] (the fourth record in FIG. 8) and a record that stores "Please tell me the location of' in [keyword] (the fifth record in FIG. 8). Then, for each of "F0356," "F2527," and so on stored in [function ID] of these extracted records, processing ID generation unit 123 obtains a sum total of the numeric values stored in [score]. As a result, the scores of functions corresponding to the instruction sentence are specified as follows, for example: the score of a function "transfer navigation" identified by a function ID "F0356" is "14," and the score of a function "map display" identified by a function ID "F2527" is "18."

Processing ID generation unit 123 specifies a function for which the highest score has been specified in the foregoing manner as a function corresponding to the instruction sentence. Subsequently, processing ID generation unit 123 extracts, from among the keywords extracted from the instruction sentence data, a keyword with a type indicated by data stored in [parameter] of relevance data associated with the specified function. Then, processing ID generation unit 123 generates processing identification data that includes a function ID identifying the function specified in the foregoing manner, and that includes the extracted keyword (if any) as a parameter. For example, processing ID generation unit 123 generates processing identification data including the function ID "F2537" of the function "map display" and a parameter "Shinjuku Station" as the processing identification data associated with the instruction sentence "Please tell me the location of Shinjuku Station."

Transmission unit 124 transmits the processing identification data generated by processing ID generation unit 123, as a reply to the speech data received by reception unit 121 in step S114, to terminal apparatus 11 that transmitted the speech data (step S118). Processing identification data acquisition unit 116 of terminal apparatus 11 receives the processing identification data transmitted from server apparatus 12 (step S119). Processing execution unit 117 executes processing identified by the processing identification data received by processing ID acquisition unit 116 (step S120). As a result, the processing execution screen exemplarily shown in FIG. 10C is displayed on display 1041.

On the other hand, in parallel with the process of step S118, storage control unit 125 of server apparatus 12 updates the log database (FIG. 9) (step S121). Specifically, storage control unit 125 reads out the log database from memory 101, and adds a new record. Subsequently, storage control unit 125 stores the terminal identification data and the position data received in step S103, the instruction sentence data generated in step S116, and the processing identification data generated in step S117 in [terminal identification data], [position], [instruction sentence], and [processing identification data] of the added record, respectively. Storage control unit 125 also acquires time data indicating the current time at this point from timer unit 126, and stores the time data in [time]. Storage control unit 125 causes memory 201 to store the log database thus updated.

In this case, precisely speaking, time indicated by the time data stored in [time] is later than the time of issuance of the speech instruction by a period required to execute steps S112 to S117. However, as the difference therebetween is practically ignorable, this time data is used as data indicating the time of issuance of the speech instruction. Similarly, precisely speaking, the position indicated by the position data stored in [position] may be different from the position of the user at the time of issuance of the speech instruction. However, as the difference therebetween is also practically ignorable, this position data is used as data indicating the position of the user at the time of issuance of the speech instruction. In order to store data indicating more accurate time and position in the log database, for example, terminal apparatus 11 may include a timer unit and transmit, to server apparatus 12, time data indicating the time of acquisition of the speech data in step S112 as well as position data generated by GPS unit 107 at the time of acquisition of the speech data in step S112, and server apparatus 12 may store these pieces of data in the log database.

The process of step S121 is executed each time a speech instruction is issued by a user of any one of various terminal apparatuses 11. As a result, the log database (FIG. 9) stores many pieces of log data related to speech instructions issued on various terminal apparatuses 11. Log data stored in the log database is used to generate prompt sentence data described below.

A description is now given of the processes of steps S105 to S108 that follow step S104. After storage control unit 125 has updated the attribute database (FIG. 6) in step S104, sentence acquisition unit 127 extracts, from the log database (FIG. 9), log data related to speech instructions that were issued in the past by users whose attributes are similar to the attributes of the user of terminal apparatus 11 (step S105).

Specifically, sentence acquisition unit 127 combines the log database (FIG. 9) with the attribute database (FIG. 6) using [terminal identification data] as a key, and extracts records with the following features from the log database combined with the attribute database: data stored in [gender] indicates the same gender as the attribute data updated in step S104, an age indicated by data stored in [age] is different from the age in the updated attribute data by a predetermined threshold or less (e.g., older or younger by five years or less), a position indicated by data stored in [position] is distant from the position in the updated attributed data by a predetermined threshold or less (e.g., 1 km or less), and time indicated by data stored in [time] is different from the time in the updated attribute data by a predetermined threshold or less (e.g., earlier or later by one hour or less) (the date is not taken into consideration).

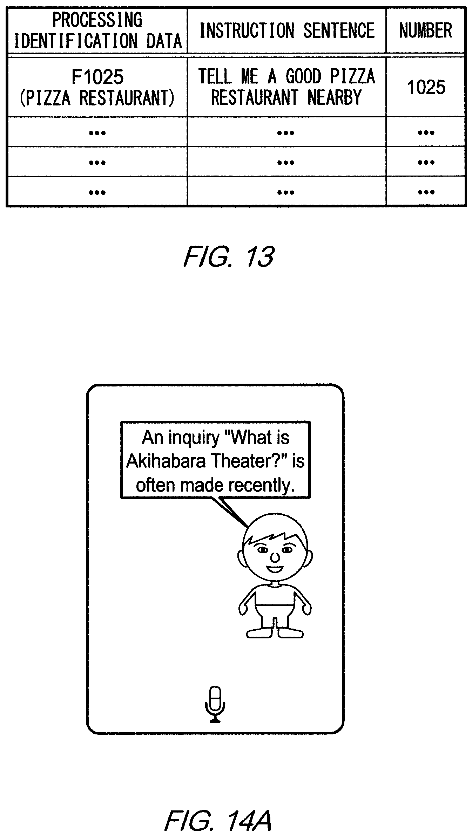

Subsequently, sentence acquisition unit 127 generates prompt sentence data using the records extracted in step S105 (step S106). Specifically, first, sentence acquisition unit 127 groups the records in such a manner that records in one group store the same data in [processing identification data]. Then, sentence acquisition unit 127 counts the number of records included in each group. Furthermore, for each group, sentence acquisition unit 127 specifies data that is largest in number among the entire data stored in [instruction sentence] of the records included in the group as representative instruction sentence data of the group. As a result, a data table exemplarily shown in FIG. 13 (hereinafter referred to as "instruction sentence list") is generated by sentence acquisition unit 127. The instruction sentence list has [processing identification data], [instruction sentence], and [number] as data fields. [Instruction sentence] stores instruction sentence data indicating a representative instruction sentence used to issue an instruction for processing identified by data stored in [processing identification data]. [Number] stores data indicating the number of times an instruction has been issued for processing identified by data stored in [processing identification data].

Suggestion sentence acquisition unit 127 selects, from the instruction sentence list, a predetermined number of (e.g., 10) records in descending order of the number indicated by data stored in [number], and generates prompt sentence data indicating, for example, a sentence "An inquiry 'XXX' is often made recently" using the pieces of instruction sentence data stored in [instruction sentence] of the selected records ("XXX" denotes an instruction sentence indicated by each instruction sentence data). Note that the format of the sentence indicated by the prompt sentence data generated by sentence acquisition unit 127 is not limited to the foregoing example. For instance, instruction sentence data per se may be generated as the prompt sentence data. Alternatively, data indicating a sentence generated by retrieving a part of a sentence indicated by instruction sentence data and embedding the extracted part in a model sentence may be generated as the prompt sentence data.

Transmission unit 124 transmits the prompt sentence data generated by sentence acquisition unit 127, as a reply to the terminal identification data and the position data received by reception unit 121 in step S103, to terminal apparatus 11 that transmitted these pieces of data (step S107). Suggestion sentence acquisition unit 113 of terminal apparatus 11 receives the prompt sentence data transmitted from server apparatus 12 (step S108).

Consequently, terminal apparatus 11 acquires, from server apparatus 12, a predetermined number of (e.g., 10) pieces of prompt sentence data corresponding to the attributes of the user and the attributes of the environment surrounding the user. In this state, if a predetermined period (e.g., 10 seconds) has elapsed without issuance of a speech instruction since terminal apparatus 11 entered a state in which it waits for the speech instruction ("Yes" of step S131), display control unit 114 selects one piece of prompt sentence data, randomly for example, from among the predetermined number of pieces of prompt sentence data received in step S108, and causes display 1041 to display a dialogue screen presenting a sentence indicated by the selected piece of prompt sentence data (step S132). As a result, the dialogue screen exemplarily shown in FIG. 11B is displayed on display 1041.

Thereafter, if the user issues a speech instruction ("Yes" of step S111), the processes of steps S112 to S121 are repeated, and the processing execution screen exemplarily shown in FIG. 11D is displayed on display 1041. On the other hand, if the predetermined time period has elapsed without issuance of a speech instruction since the user issued a speech instruction, or since the prompt sentence displayed on display 1041 was changed ("Yes" of step S131), the process of step S132 is repeated, and a dialogue screen presenting a new prompt sentence is displayed on display 1041.

As described above, when the user intends to issue a speech instruction but does not instantly come up with the content of the speech instruction, speech agent system 1 presents the user with a prompt sentence corresponding to the attributes of the user and the attributes of the environment surrounding the user. This enables the user to issue a speech instruction with ease.

### [Modification Examples]

Speech agent system 1 described above is an embodiment of the present invention, and can be modified in various ways within the scope of the technical ideas of the present invention. Examples of such modifications will now be described. Below, the modification examples will be described mainly with a focus on the differences between the modification examples and the embodiment, and a description of components and tasks that are similar to those of the embodiment will be omitted as appropriate. Furthermore, among components of a speech agent system according to the following modification examples, components that are the same as or correspond to the components of speech agent system 1 according to the embodiment are given the same reference signs thereas. Note that two or more of the embodiment and the following modification examples may be combined as appropriate.
(1) To generate prompt sentence data, sentence acquisition unit 127 may specify, from among the entire instruction sentence data stored in the log database (FIG. 9), instruction sentence data indicating an instruction that is used increasingly frequently as time elapses within, for example, a predetermined period between the current time and a time point in the past, based on time data and instruction sentence data respectively stored in [time] and [instruction sentence] of log data. Then, sentence acquisition unit 127 may generate prompt sentence data using the specified instruction sentence data.
   This modification example has a high probability of presenting a user with a prompt sentence indicating an example speech instruction that is frequently used by many users recently. Therefore, this modification example is desirable for a user who wants to obtain hot-topic information that is attracting the attention of many other users at that point.
(2) Suggestion sentence acquisition unit 127 may generate prompt sentence data to be transmitted to, for example, terminal apparatus 11-X in such a manner that the generated prompt sentence data prompts an instruction that does not bear a predetermined similarity to an instruction indicated by certain instruction sentence data stored in the log database (FIG. 9) in association with terminal identification data of terminal apparatus 11-X.

In a specific example of this modification example, sentence acquisition unit 127 extracts processing identification data stored in the log database in association with the terminal identification data of terminal apparatus 11-X, and generates prompt sentence data using log data other than log data that stores, in [processing identification data], processing identification data including the function ID included in the extracted processing identification data. In this case, a user of terminal apparatus 11-X is presented with a prompt sentence prompting a speech instruction for executing processing that uses a function different from any function that he/she used in the past by way of a speech instruction. Thus, the user is given the opportunity to use a function that he/she has never used in the past.

In another specific example of this modification example, sentence acquisition unit 127 excludes, from the entire log data stored in the log database, log data that stores the terminal identification data of terminal apparatus 11-X in [terminal identification data], and generates prompt sentence data using only log data related to terminal apparatuses 11 different from terminal apparatus 11-X. When the number of pieces of log data stored in the log database is small, the generation of prompt sentence data to be transmitted to terminal apparatus 11-X has a high probability of using instruction sentence data included in log data related to speech instructions that were issued on terminal apparatus 11-X in the past. This inconvenience does not occur in the foregoing specific example.

The user is aware of speech instructions that he/she issued in the past, and generally there is no difficulty in issuing a similar speech instruction. Therefore, in light of the object of the present invention, it is not desirable to present the user with a prompt sentence prompting a speech instruction that is the same as or similar to a speech instruction that he/she issued in the past. The present modification example lowers the probability of the occurrence of such inconvenience.

(3) When a user issues a speech instruction during display of a prompt sentence on display 1041 in step S132 of FIG. 12, prompt sentence identification data that identifies prompt sentence data indicating the prompt sentence displayed at the time of issuance of the speech instruction may be transmitted to server apparatus 12 together with speech data, for example. In server apparatus 12, processing ID generation unit 123 may generate processing identification data that identifies processing corresponding to a combination of an instruction indicated by instruction sentence data (an instruction indicated by the speech data) and the sentence indicated by the prompt sentence data identified by the prompt sentence identification data.

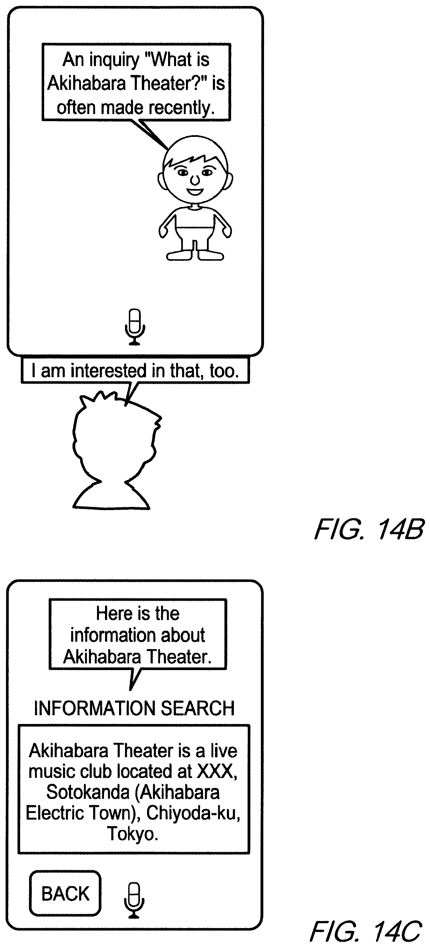

FIGS. 14A to 14C exemplarily show screens displayed on display 1041 in the present modification example. A screen exemplarily shown in FIG. 14A displays the following prompt sentence: "An inquiry 'What is Akihabara Theater?' is often made recently" (step S132 of FIG. 12). If the user says, for example, "I am interested in that, too" in response to this prompt sentence as shown in FIG. 14B, transmission unit 112 transmits, to server apparatus 12, speech data indicating the user's speech instruction "I am interested in that, too" together with prompt sentence data indicating the prompt sentence "An inquiry 'What is Akihabara Theater?' is often made recently" (step S113 of FIG. 12).

In server apparatus 12, processing ID generation unit 123 specifies "that" included in the instruction sentence "I am interested in that, too" as "Akihabara Theater" included in the prompt sentence "An inquiry 'What is Akihabara Theater?' is often made recently." Then, it generates a sentence "I am interested in Akihabara Theater, too" as well as processing identification data corresponding to this sentence (step S117 of FIG. 12). Alternatively, processing ID generation unit 123 may specify processing corresponding to the speech instruction by simply extracting keywords contained in the instruction sentence "I am interested in that, too" and in a portion within the quotation marks (' ')-the 'What is Akihabara Theater' portion-of the prompt sentence. In terminal apparatus 11, processing execution unit 117 executes processing identified by the processing identification data thus generated. As a result, a processing execution screen corresponding to the speech instruction is displayed on display 1041 as shown in FIG. 14C.

In the foregoing example, prompt sentence data is transmitted from terminal apparatus 11 to server apparatus 12. In the present modification example, it is sufficient that data transmitted from terminal apparatus 11 to server apparatus 12 be data that identifies a prompt sentence (prompt sentence identification data), and prompt sentence data is an example of such data. Therefore, for example, server apparatus 12 may transmit individual prompt sentence data to terminal apparatus 11 with prompt sentence identification data attached thereto (step S107 of FIG. 12), and terminal apparatus 11 may transmit the prompt sentence identification data attached to the prompt sentence data, in place of the prompt sentence data, to server apparatus 12.

In the present modification example, when the user wants to issue a speech instruction that is the same as or similar to an example speech instruction indicated by a prompt sentence, the user need not read out the example speech instruction, and can issue a speech instruction to terminal apparatus 11 in a more natural speaking style.

(4) In the embodiment, the gender and age of a user are used as the attributes of the user that are used to generate prompt sentence data. Furthermore, the current position of the user and the current time are used as the attributes of the environment surrounding the user that are used to generate prompt sentence data. In the present invention, the attributes of the user and the attributes of the environment surrounding the user, which are used to generate prompt sentence data, are not limited to the ones just mentioned above, and various types of other attributes can be used.

For example, the hobbies and occupation of the user, the number of times a speech instruction was issued in the past (indicating a skill in issuing a speech instruction), the frequency of issuance of a speech instruction in the past, and the like may compose the attributes of the user that are used to generate prompt sentence data, either in addition to or in place of the gender and age.

Furthermore, for example, the current weather and air temperature of the area where the user is located, information indicating whether the user is at home, in an office, or in another place, information indicating whether today is a weekday or a day off, and the like may compose the attributes of the environment surrounding the user that are used to generate prompt sentence data, either in addition to or in place of the current position and the current time.

(5) A speech instruction that was issued by a user in the past (e.g., most recently) serves as an attribute indicating the user's hobby or request. Therefore, a speech instruction that was issued by the user in the past may compose the attributes of the user that are used to generate prompt sentence data. In this modification example, memory 201 of server apparatus 12 stores an inter-processing relevance database and a model sentence database. The inter-processing relevance database manages, for each arbitrary processing pair among a plurality of items of processing that can be executed by terminal apparatus 11, inter-processing relevance data indicating a magnitude of relevance between the processing pair. The model sentence database manages model sentence data indicating a model of a prompt sentence corresponding to each item of processing.

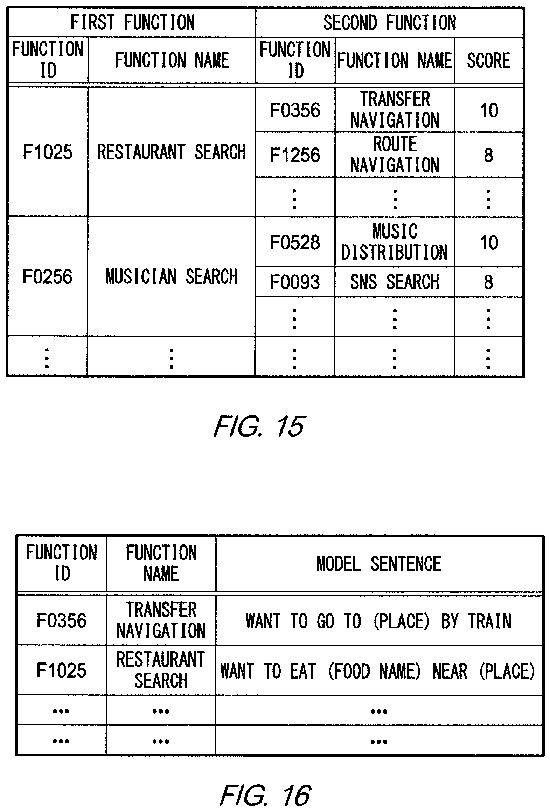

FIG. 15 shows an exemplary structure of the inter-processing relevance database. In the modification example, it will be assumed that inter-processing relevance is specified on a function-by-function basis by way of example. Therefore, the inter-processing relevance database is a collection of records that are in one-to-one association with the plurality of items of processing that can be executed by terminal apparatus 11, and has [first function] and [second function] as data fields. [First function] has [function ID] and [function name] as subfields, in which a function ID and a function name of a first function are respectively stored. For each of a plurality of second functions (all other functions that have relevance to a first function), [second function] has [function ID], [function name], and [score] as subfields, in which a function ID of the second function, a function name of the second function, and a score representing a numeric value indicating a magnitude of relevance between first processing and second processing are respectively stored.

For example, data exemplarily shown in the first row in FIG. 15 indicates that a score indicating a magnitude of relevance between a function "restaurant search" identified by a function ID "F1025" and a function "transfer navigation" identified by a function ID "F0356" is "10."

FIG. 16 shows an exemplary structure of the model sentence database. The model sentence database is a collection of records that are in one-to-one association with the plurality of items of processing that can be executed by terminal apparatus 11, and has the following data fields: [function ID] in which a function ID is stored, [function name] in which a function name is stored, and [model sentence] in which model sentence data indicating a model of a prompt sentence prompting a function is stored.

For example, data exemplarily shown in the first row in FIG. 16 indicates that a model sentence associated with the function "transfer navigation" identified by the function ID "F0356" is "want to go to (place) by train." Here, "(place)" indicates that a keyword with a type including "place" (see FIG. 8) is inserted therein.

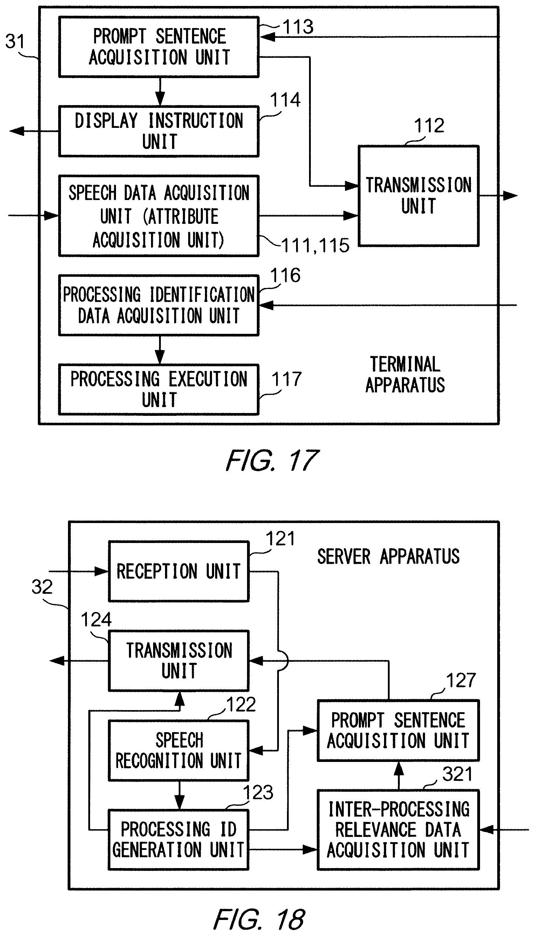

FIG. 17 shows functional components of terminal apparatus 31 according to the present modification example. Terminal apparatus 31 acquires speech data as attribute data. Therefore, terminal apparatus 31 includes attribute acquisition unit 111 and speech data acquisition unit 115 as a single component without making a distinction therebetween.

FIG. 18 shows functional components of server apparatus 32 according to the present modification example. Server apparatus 32 includes relevance data acquisition unit 321 that reads out the inter-processing relevance database (FIG. 15) from, for example, memory 201 and acquires inter-processing relevance data.

In conformity to the inter-processing relevance data, sentence acquisition unit 127 of server apparatus 32 selects one item of processing from among a plurality of items of processing that can be executed by terminal apparatus 31 based on, for example, a magnitude of relevance to an item of processing identified by processing identification data that was generated by processing ID generation unit 123 most recently, and generates prompt sentence data prompting an instruction for the selected item of processing.

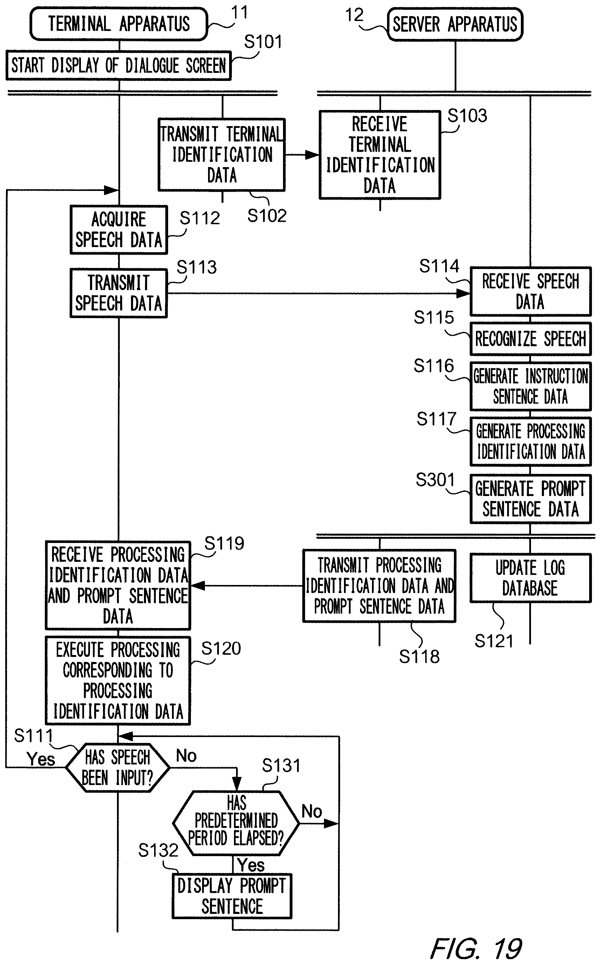

FIG. 19 shows a sequence of processes executed by speech agent system 1 in the present modification example. Note that in FIG. 19, steps that are the same as or correspond to steps of FIG. 12 are given the same reference signs thereas.

In the present modification example, first, a user of terminal apparatus 31 issues a speech instruction after the start of display of a dialogue screen (step S101). Then, terminal apparatus 31 and server apparatus 32 execute a sequence of processes (steps S112 to S120) corresponding to the speech instruction, and terminal apparatus 31 executes processing corresponding to the speech instruction.

Note that in the present modification example, after generating processing identification data that identifies processing corresponding to the speech instruction (step S117), server apparatus 32 generates prompt sentence data (step S301), and transmits the processing identification data (step S118) together with the prompt sentence data generated in step S301. Terminal apparatus 31 receives the prompt sentence data that has been transmitted from server apparatus 32 in response to transmission of the speech data (step S113), together with the processing identification data (step S119). The prompt sentence data received in step S119 is later used to display a prompt sentence (step S132).

The following describes an exemplary procedure in which server apparatus 32 generates the prompt sentence data in step S301. First, relevance data acquisition unit 321 searches the inter-processing relevance database (FIG. 15) for a record that stores, in [function ID] of [first function], a function ID included in the processing identification data that was generated by processing ID generation unit 123 in step S117, and passes this record to sentence acquisition unit 127.

Suggestion sentence acquisition unit 127 selects, from among data included in [second function] of the record received from relevance data acquisition unit 321, a function ID stored in [function ID] associated with [score] indicating the largest numeric value as a function ID that identifies a function of the greatest relevance to a function corresponding to a speech instruction that was issued by the user most recently. Subsequently, sentence acquisition unit 127 searches the model sentence database (FIG. 16) for a record corresponding to the selected function ID, and acquires model sentence data stored in [model sentence] of the searched record.

Subsequently, if keywords contained in the processing identification data that was generated by processing ID generation unit 123 in step S117 include a keyword whose type matches "(place)" or the like indicated by the model sentence data, sentence acquisition unit 127 substitutes a character string in "(place)" or the like with that keyword. Data indicating a post-substitution sentence serves as the prompt sentence data. This concludes the description of the exemplary procedure in which server apparatus 32 generates the prompt sentence data in step S301.

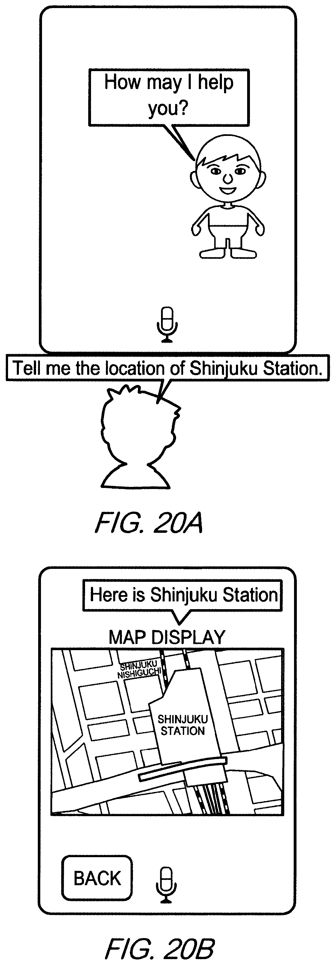

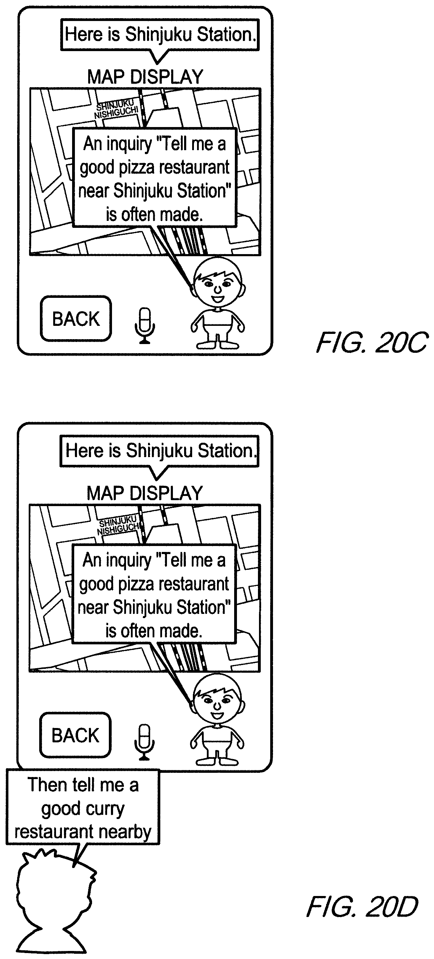

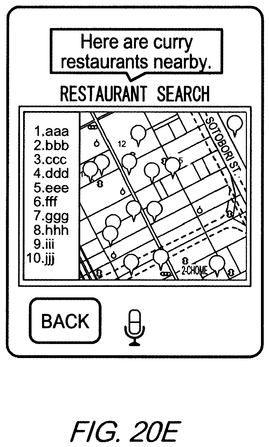

FIGS. 20A to 20E exemplarily show a transition of screens displayed on display 1041 of terminal apparatus 31 in the present modification example. On a dialogue screen, first, the user issues a speech instruction (FIG. 20A), and terminal apparatus 31 executes processing corresponding to the speech instruction (FIG. 20B). Thereafter, if the user does not issue a speech instruction to terminal apparatus 31 for a while, display 1041 displays a prompt sentence prompting a speech instruction (FIG. 20C). This prompt sentence prompts an instruction for processing that has high relevance to the processing corresponding to the speech instruction that was issued by the user most recently. If the user issues a new speech instruction as prompted by the prompt sentence (FIG. 20D), terminal apparatus 31 executes processing corresponding to the new speech instruction (FIG. 20E).

(6) In the embodiment, there is no particular restriction regarding the new/old states of the times of issuance of speech instructions indicated by log data used to generate prompt sentence data, and the entire log data stored in the log database is the target of extraction in step S105 (FIG. 12). Alternatively, among the entire log data stored in the log database, for example, only log data related to a speech instruction(s) that was issued within a predetermined period (e.g., one year) between the current time and a time point in the past may be used to generate prompt sentence data.

(7) In generating prompt sentence data, sentence acquisition unit 127 may exclude, from the entire log data stored in the log database, log data that stores processing identification data including a particular function ID in [processing identification data], and use only log data that does not include the particular function ID.

When issuing an instruction for execution of processing that uses a certain type of function (e.g., schedule management), a user may make heavy use of words that are specific to himself/herself (e.g., the names of his/her acquaintances). Therefore, information included in instruction sentence data related to that type of function may not be useful for other users, or may not be desirable in view of protection of personal information. With the present modification example, this inconvenience can be avoided.

(8) In the embodiment, to generate prompt sentence data (step S106 of FIG. 12), sentence acquisition unit 127 groups instruction sentence data indicated by log data that has been extracted from the log database based on similarity in attribute data, in such a manner that every instruction sentence data in one group is associated with the same processing identification data. Then, the number of pieces of log data included in each group is counted, and instruction sentence data in a group including the largest number of pieces of log data (representative instruction sentence data) is used to generate the prompt sentence data. This is a specific example of a method used by sentence acquisition unit 127 to select instruction sentence data used to generate the prompt sentence data, and can be replaced by various types of other methods.

Grouping may be performed based on other criteria. For example, instead of categorizing instruction sentence data associated with the same processing identification data into one group, instruction sentence data indicating instruction sentences containing the same keyword may be categorized into one group. Furthermore, in selection of groups of instruction sentence data used to generate the prompt sentence data, the method of selecting a predetermined number of groups in descending order of the number of pieces of log data may be replaced by, for example, a method of excluding a predetermined number of groups in descending order of the number of pieces of log data (e.g., from the first to the fifth groups), and making a selection from the remaining groups in descending order of the number of pieces of log data (e.g., the sixth and subsequent groups). This prevents an inconvenient situation where only a speech instruction that is frequently issued by many users (e.g., "What is the weather like now?") is repeatedly presented to a user as a prompt sentence. Moreover, instruction sentence data that was used by sentence acquisition unit 127 to generate prompt sentence data within a predetermined period in the past may not be used to generate new prompt sentence data (to be transmitted to the same terminal apparatus 11). This prevents an inconvenient situation where the same or similar prompt sentences are repeatedly presented to the same user.

(9) In the embodiment, sentence acquisition unit 127 of server apparatus 12 acquires prompt sentence data by generating the prompt sentence data using instruction sentence data included in log data extracted from the log database. Suggestion sentence acquisition unit 127 may not generate prompt sentence data, and may acquire prompt sentence data by reading out the prompt sentence data from, for example, memory 201 or receiving the prompt sentence data from an external apparatus. For example, sentence acquisition unit 127 may retrieve instruction sentence data included in log data extracted from the log database based on similarity in attribute data, and acquire the retrieved instruction sentence data as-is as prompt sentence data.

(10) In the embodiment, server apparatus 12 executes a speech recognition process (step S115 of FIG. 12) and a process of specifying processing corresponding to a speech instruction (steps S116 and S117 of FIG. 12). One or both of these processes may be executed by terminal apparatus 11.

(11) In the embodiment, a display apparatus, an input device, and a sound pickup apparatus, which are exemplarily described as display 1041, touchscreen 1042, and microphone 105, respectively, are all built in terminal apparatus 11. However, at least one of them may be configured as an external apparatus different from terminal apparatus 11. Furthermore, in the embodiment, various types of data used by terminal apparatus 11 are stored in memory 101 built in terminal apparatus 11. However, an entirety or a part of such data may be stored in an external storage apparatus. Similarly, an entirety or a part of various types of data used by server apparatus 12 may be stored in an external storage apparatus in place of memory 201.

(12) In the embodiment, terminal apparatus 11 transmits terminal identification data and position data to server apparatus 12 upon entering a state in which it waits for a speech instruction (steps S102 and S103 of FIG. 12), and transmission of these pieces of data triggers the processes of generating and transmitting prompt sentence data (steps S104 to S108 of FIG. 12). These processes are not limited to being executed at a timing when terminal apparatus 11 enters a state in which it waits for a speech instruction. Terminal apparatus 11 may transmit position data to server apparatus 12, for example, each time a predetermined period has elapsed, or at a timing when a movement of terminal apparatus 11 by a predetermined distance or more is detected. Furthermore, terminal apparatus 11 may transmit a request for prompt sentence data to server apparatus 12 when terminal apparatus 11 needs to display a prompt sentence ("Yes" of step S131 of FIG. 12), and the processes of generating and transmitting the prompt sentence data (steps S104 to S108 of FIG. 12) may be executed in response to the request.

(13) In the embodiment or modification examples, terminal apparatus 11 may execute at least a part of processing prompted by a prompt sentence as background processing in a period that follows reception of prompt sentence data from server apparatus 12 by terminal apparatus 11 (that follows step S108 of FIG. 12 or step S119 of FIG. 19) and that precedes a user's issuance of a speech instruction in response to display of the prompt sentence (step S132 of FIG. 12 or step S132 of FIG. 19).

In a variation of the embodiment, in the sequence of processes shown in FIG. 12, server apparatus 12 specifies prompt sentence data as well as processing identification data that identifies processing corresponding to the prompt sentence data in step S106 based on, for example, data stored in [processing identification data] of log data extracted from the log database (FIG. 9) in step S105. Then, in step S107, server apparatus 12 transmits the prompt sentence data as well as the specified processing identification data to terminal apparatus 11. When terminal apparatus 11 receives the prompt sentence data as well as the processing identification data in step S108, it executes the processing identified by the received processing identification data in the background without waiting for the user's speech instruction.

In a variation of the modification example (5), in the sequence of processes shown in FIG. 19, server apparatus 12 transmits prompt sentence data as well as processing identification data in step S118, and terminal apparatus 11 receives the prompt sentence data as well as the processing identification data in step S119. Therefore, after the process of step S119, terminal apparatus 11 executes processing identified by the received processing identification data in the background without waiting for the user's speech instruction.

Thereafter, if the user issues a speech instruction in response to a prompt sentence as prompted by the prompt sentence, terminal apparatus 11 displays the result of the processing that has already been executed in the background.

In this modification example, processing conforming to a speech instruction prompted by a prompt sentence is already executed before the speech instruction is issued. Therefore, when the user issues the speech instruction as prompted by the prompt sentence, the result of the processing is presented to the user at higher speed.

Note that the user does not necessarily issue the exact speech instruction prompted by the prompt sentence. For example, in the examples of FIGS. 11A to 11D, the user issues a speech instruction "Then tell me a good curry restaurant nearby" in response to a prompt sentence indicating an exemplary sentence "Tell me a good pizza restaurant nearby." In this case, processing corresponding to the prompt sentence and processing corresponding to the speech instruction have different parameters and the same function. Therefore, in this case also, the result of the processing can be displayed instantly if this function (the function "restaurant search" in the examples of FIGS. 11A to 11D) is activated in the background before the speech instruction is issued.

In a further variation of the modification examples, when a user issues a speech instruction in response to a prompt sentence, terminal apparatus 11 may display the result of processing conforming to the speech instruction without accessing server apparatus 12. In this case, in order to recognize the speech instruction that is issued by the user as prompted by the prompt sentence, terminal apparatus 11 includes components that are similar to speech recognition unit 122 and processing ID generation unit 123 included in server apparatus 12. When the user issues the speech instruction as prompted by the prompt sentence, terminal apparatus 11 recognizes the speech indicated by speech data and generates instruction sentence data as well as processing identification data (processes similar to the processes of steps S115 to S117 of FIG. 12 or FIG. 19) without transmitting the speech data to server apparatus 12. If processing identified by the processing identification data thus generated (processing corresponding to the speech data) matches processing executed in the background, terminal apparatus 11 instantly displays the result of the processing that has already been executed.

In this modification example, even if terminal apparatus 11 cannot communicate with server apparatus 12 when the user issues a speech instruction as prompted by a prompt sentence, terminal apparatus 11 presents the user with the result of processing conforming to the speech instruction.

(14) Terminal apparatus 11 may include a speaker, and a prompt sentence may be read out via the speaker. In this case, terminal apparatus 11 includes, as functional components, a speech data generation unit that generates speech data indicating a speech formed by reading out a sentence indicated by prompt sentence data, and a speech data output unit that outputs the speech data to the speaker. The speech data output unit outputs the speech data to the speaker at the same time as when display control unit 114 issues an instruction for displaying the prompt sentence. As a result, the prompt sentence is not only displayed, but also presented in the form of a speech, to the user.

(15) In the embodiment, terminal apparatus 11 and server apparatus 12 are realized by causing an ordinary computer to execute processes conforming to the program according to the present invention. Alternatively, one or both of terminal apparatus 11 and server apparatus 12 may be configured as a so-called dedicated apparatus.

## Claims

1. A terminal apparatus (11), comprising:
an attribute acquisition unit (111) adapted to acquire attribute data indicating an attribute of a user or an environment surrounding the user;
a suggestion sentence acquisition unit (113) adapted to receive, from a server apparatus, prompt sentence data indicating a sentence that prompts the user to issue a speech instruction and corresponding to the attributes indicated by attribute data, the prompt sentence data being transmitted from the server apparatus in reply to transmission of the attribute data to the server apparatus and being generated using pieces of the attribute data and pieces of instruction sentence data stored in association with such pieces of attribute data;
a display control unit (114) adapted to cause a display apparatus to display the sentence indicated by the prompt sentence data when a predetermined period elapses without issuance of a speech instruction by the user since the terminal apparatus started to wait for the speech instruction by the user;
a speech data acquisition unit (115) adapted to acquire speech data indicating a speech made by the user in response to the display apparatus displaying the sentence indicated by the prompt sentence data;
a processing ID acquisition unit (116) adapted to receive, from a server apparatus, processing identification data identifying processing corresponding to an instruction indicated by the speech data;
a processing execution unit (117) adapted to execute the processing identified by the processing identification data; and
a transmission unit (112) adapted to transmit the attribute data and the speech data to the server apparatus (12), wherein
the processing ID acquisition unit (116) is adapted to receive the processing identification data that is transmitted from the server apparatus in reply to transmission of the speech data by the transmission unit.

2. The terminal apparatus (11) according to claim 1, wherein
the transmission unit (112) is adapted to transmit, to the server apparatus, prompt sentence identification data identifying the prompt sentence data indicating the sentence that is displayed by the display apparatus when the speech data is acquired by the speech data acquisition unit, and
the processing ID acquisition unit (116) is adapted to receive the processing identification data that is transmitted from the server apparatus in reply to transmission of the speech data and the prompt sentence identification data, the processing identification data identifying the processing corresponding to a combination of the instruction indicated by the speech data and the sentence identified by the prompt sentence identification data.

3. The terminal apparatus (11) according to claims 1 or 2, wherein
the attribute acquisition unit (111) is adapted to acquire the speech data indicating the speech made by the user as the attribute data.

4. A server apparatus (12), comprising:
a reception unit (121) adapted to receive attribute data from a terminal apparatus, the attribute data indicating an attribute of a user of the terminal apparatus or an attribute of an environment surrounding the user;
a storage control unit (125) adapted to store the attribute data received by the reception unit (121) in association with instruction sentence data that has been generated using speech data received by the reception unit (121) and time data indicating the time of issuance of an instruction indicated by the instruction sentence data;
a suggestion sentence acquisition unit (127) adapted to generate prompt sentence data indicating a sentence that prompts the user to issue a speech instruction when a predetermined period elapses without issuance of a speech instruction by the user since the terminal apparatus started to wait for the speech instruction by the user, wherein the suggestion sentence acquisition unit (127) is adapted to acquire prompt sentence data corresponding to the attributes indicated by attribute data received by reception unit (121) using pieces of the attribute data and pieces of instruction sentence data stored in association with such pieces of attribute data;
a transmission unit (124) adapted to transmit the prompt sentence data to the terminal apparatus in reply to reception of the attribute data by the reception unit; wherein
the reception unit is adapted to receive speech data that is transmitted from the terminal apparatus after transmission of the prompt sentence data by the transmission unit,
a speech recognition unit (122) adapted to recognize an instruction indicated by the speech data; and
a processing ID generation unit (116) adapted to generate processing identification data identifying processing corresponding to the instruction, and
wherein the transmission unit (124) is adapted to transmit the processing identification data to the terminal apparatus in reply to the speech data received by the reception unit.

5. The server apparatus (12) according to claim 4, further comprising
a storage control unit (125), wherein
the reception unit (121) is adapted to receive the attribute data and the speech data from each of a plurality of terminal apparatuses,
the storage control unit (125) is adapted to cause a storage apparatus to store the attribute data received by the reception unit from each terminal apparatus and instruction sentence data in association with each other, the instruction sentence data indicating a sentence of the instruction that is indicated by the speech data received by the reception unit from the terminal apparatus and that is recognized by the speech recognition unit, and
the suggestion sentence acquisition unit (127) is adapted to generate prompt sentence data to be transmitted from the transmission unit to one of the plurality of terminal apparatuses using instruction sentence data that is stored in the storage apparatus in association with attribute data received by the reception unit from the one of the plurality of terminal apparatuses.

6. The server apparatus (12) according to claim 5, wherein
the storage control unit (125) is adapted to cause the storage apparatus to store instruction sentence data and time data in association with each other, the time data indicating time of issuance of an instruction indicated by the instruction sentence data, and
the suggestion sentence acquisition unit (127) is adapted to specify instruction sentence data indicating an instruction that is used increasingly frequently as time elapses based on a plurality of pieces of instruction sentence data stored in the storage apparatus and time data stored in association with the plurality of pieces of instruction sentence data, and generate prompt sentence data to be transmitted from the transmission unit using the specified instruction sentence data.

7. The server apparatus (12) according to claim 5 or 6, wherein
the storage control unit (125) is adapted to cause the storage apparatus to store instruction sentence data and terminal identification data in association with each other, the instruction sentence data being generated by the speech recognition unit from speech data, and the terminal identification data identifying a terminal apparatus that has transmitted the speech data, and
the suggestion sentence acquisition unit (127) is adapted to generate, as prompt sentence data to be transmitted from the transmission unit to one of the plurality of terminal apparatuses, prompt sentence data prompting an instruction that does not bear a predetermined similarity to an instruction indicated by instruction sentence data that is stored in the storage apparatus in association with terminal identification data identifying the one of the plurality of terminal apparatuses.

8. The server apparatus (12) according to claim 4, further comprising
an relevance data acquisition unit adapted to acquire inter-processing relevance data indicating a magnitude of relevance between two arbitrary items of processing included among a plurality of items of processing that can be executed by the terminal apparatus, wherein
the reception unit (121) is adapted to receive the speech data transmitted from the terminal apparatus as the attribute data,
the speech recognition unit (122) is adapted to recognize an instruction indicated by the attribute data,
the processing ID generation unit (123) is adapted to generate processing identification data identifying an item of processing corresponding to the instruction indicated by the attribute data, and
the suggestion sentence acquisition unit (127) is adapted to select one item of processing from among the plurality of items of processing based on a magnitude of relevance to the item of processing corresponding to the instruction indicated by the attribute data, and acquire prompt sentence data indicating a sentence prompting an instruction for the selected one item of processing as prompt sentence data corresponding to the attribute indicated by the attribute data, the magnitude being indicated by the inter-processing relevance data.

9. A program for causing a computer to execute:
acquiring, by a terminal apparatus, attribute data indicating an attribute of a user or an environment surrounding the user;
receiving, from a server apparatus, prompt sentence data indicating a sentence that prompts the user to issue a speech instruction and corresponding to the attributes indicated by attribute data, the prompt sentence data being transmitted from the server apparatus in reply to transmission of the attribute data to the server apparatus and being generated using pieces of the attribute data and pieces of instruction sentence data stored in association with such pieces of attribute data;
displaying, by the terminal apparatus, the sentence indicated by the prompt sentence data on a display apparatus when a predetermined period elapses without issuance of a speech instruction by the user since terminal apparatus started to wait for the speech instruction by the user;
acquiring, by the terminal apparatus, speech data indicating a speech made by the user in response to the display apparatus displaying the sentence indicated by the prompt sentence data;
receive, from a server apparatus, processing identification data identifying processing corresponding to an instruction indicated by the speech data;
identifying a processing based on the processing identification data; and
transmitting the attribute data and the speech data to the server apparatus, wherein
the processing identification data is received in reply to transmission of the speech data by the transmission unit.

## Patentansprüche

1. Endgeräteinrichtung (11), die Folgendes umfasst:
eine Attributerfassungseinheit (111), die so angepasst ist, dass sie Attributdaten erfasst, die ein Attribut eines Benutzers oder einer den Benutzer umgebenden Umgebung angeben;
eine Vorschlagssatzerfassungseinheit (113), die so angepasst ist, dass sie von einer Servereinrichtung Aufforderungssatzdaten empfängt, die einen Satz angeben, der den Benutzer dazu auffordert, eine Sprachanweisung zu erteilen und die den durch Attributdaten angegebenen Attributen entsprechen, wobei die Aufforderungssatzdaten von der Servereinrichtung als Antwort auf die Übertragung der Attributdaten zur Servereinrichtung übertragen und erzeugt werden, wobei Elemente der Attributdaten und Elemente von Anweisungssatzdaten verwendet werden, die in Assoziation mit solchen Elementen von Attributdaten gespeichert sind;
ein Anzeigesteuereinheit (114), die so angepasst ist, dass sie bewirkt, dass eine Anzeigeeinrichtung den durch die Aufforderungssatzdaten angegebenen Satz anzeigt, wenn ein vorbestimmter Zeitraum verstreicht, ohne dass vom Benutzer eine Sprachanweisung erteilt wird, seitdem die Endgeräteinrichtung begann, auf die Sprachanweisung durch den Benutzer zu warten;
eine Sprachdatenerfassungseinheit (115), die so angepasst ist, dass sie Sprachdaten erfasst, die eine Äußerung angeben, die vom Benutzer als Reaktion darauf gemacht wird, dass die Anzeigeeinrichtung den Satz anzeigt, der durch die Aufforderungssatzdaten angegeben wird;
eine Verarbeitungs-ID-Erfassungseinheit (116), die so angepasst ist, dass sie von einer Servereinrichtung Verarbeitungsidentifikationsdaten empfängt, die eine Verarbeitung entsprechend einer durch die Sprachdaten angegebenen Anweisung identifizieren;
eine Verarbeitungsausführungseinheit (117), die so angepasst ist, dass sie die durch die Verarbeitungsidentifikationsdaten identifizierte Verarbeitung ausführt; und
eine Sendeeinheit (112), die so angepasst ist, dass sie die Attributdaten und die Sprachdaten zur Servereinrichtung (12) überträgt, wobei
die Verarbeitungs-ID-Erfassungseinheit (116) so angepasst ist, dass sie die Verarbeitungsidentifikationsdaten empfängt, die von der Servereinrichtung als Antwort auf eine Übertragung der Sprachdaten durch die Sendeeinheit übertragen werden.

2. Endgeräteinrichtung (11) nach Anspruch 1, wobei
die Sendeeinheit (112) so angepasst ist, dass sie Aufforderungssatzidentifikationsdaten zur Servereinrichtung überträgt, welche die Aufforderungssatzdaten identifizieren, die den von der Anzeigeeinrichtung angezeigten Satz angeben, wenn die Sprachdaten von der Sprachdatenerfassungseinheit erfasst werden, und
die Verarbeitungs-ID-Erfassungseinheit (116) so angepasst ist, dass sie die Verarbeitungsidentifikationsdaten empfängt, die von der Servereinrichtung als Antwort auf eine Übertragung der Sprachdaten und der Aufforderungssatzidentifikationsdaten übertragen werden, wobei die Verarbeitungsidentifikationsdaten die Verarbeitung identifizieren, die einer Kombination der durch die Sprachdaten angegebenen Anwendung und des durch die Aufforderungssatzidentifikationsdaten identifizierten Satzes entsprechen.

3. Endgeräteinrichtung (11) nach den Ansprüchen 1 oder 2, wobei
die Attributerfassungseinheit (111) so angepasst ist, dass sie die Sprachdaten, welche die vom Benutzer gemachte Aussage angeben, als die Attributdaten erfasst.

4. Servereinrichtung (12), die Folgendes umfasst:
eine Empfangseinheit (121), die so angepasst ist, dass sie Attributdaten von einer Endgeräteinrichtung empfängt, wobei die Attributdaten ein Attribut eines Benutzers der Endgeräteinrichtung oder ein Attribut einer den Benutzer umgebenden Umgebung angeben;
eine Speichersteuereinheit (125), die so angepasst ist, dass sie die von der Empfangseinheit (121) empfangenen Attributdaten in Assoziation mit Anweisungssatzdaten, die unter Verwendung von von der Empfangseinheit (121) empfangenen Sprachdaten erzeugt worden sind, und Zeitdaten, die den Zeitpunkt der Ausgabe einer durch die Anweisungssatzdaten angegebenen Anweisung angeben, speichert;
eine Vorschlagssatzerfassungseinheit (127), die so angepasst ist, dass sie Aufforderungssatzdaten erzeugt, die einen Satz angeben, der den Benutzer dazu auffordert, eine Sprachanweisung herauszugeben, wenn ein vorbestimmter Zeitraum ohne Ausgabe einer Sprachanweisung durch den Benutzer verstreicht, seitdem die Endgeräteinrichtung begann, auf die Sprachanweisung durch den Benutzer zu warten, wobei die Vorschlagssatzerfassungseinheit (127) so angepasst ist, dass sie Aufforderungssatzdaten erfasst, die den Attributen entsprechen, die durch von der Empfangseinheit (121) empfangene Attributdaten angegeben werden, wobei Elemente der Attributdaten und Elemente von Anweisungssatzdaten verwendet werden, die in Assoziation mit solchen Elementen von Attributdaten gespeichert sind;
eine Sendeeinheit (124), die so angepasst ist, dass sie die Aufforderungssatzdaten als Antwort auf einen Empfang der Attributdaten durch die Empfangseinheit zur Endgeräteinrichtung überträgt; wobei
die Empfangseinheit so angepasst ist, dass sie Sprachdaten empfängt, die nach der Übertragung der Aufforderungssatzdaten durch die Sendeeinheit von der Endgeräteinrichtung übertragen werden,
eine Spracherkennungseinheit (122), die so angepasst ist, dass sie eine durch die Sprachdaten angegebene Anweisung erkennt; und
eine Verarbeitungs-ID-Erzeugungseinheit (116), die so angepasst ist, dass sie Verarbeitungsidentifikationsdaten erzeugt, die eine der Anweisung entsprechende Verarbeitung identifizieren, und
wobei die Sendeeinheit (124) so angepasst ist, dass sie die Verarbeitungsidentifikationsdaten als Antwort auf die von der Empfangseinheit empfangenen Sprachdaten zur Endgeräteinrichtung überträgt.

5. Servereinrichtung (12) nach Anspruch 4, die weiter Folgendes umfasst:
eine Speichersteuereinheit (125), wobei
die Empfangseinheit (121) so angepasst ist, dass sie die Attributdaten und die Sprachdaten von jeder einer Vielzahl von Endgeräteinrichtungen empfängt,
wobei die Speichersteuereinheit (125) so angepasst ist, dass sie bewirkt, dass eine Speichereinrichtung die Attributdaten, die von der Empfangseinheit von jeder Endgeräteinrichtung empfangen werden, und Anweisungssatzdaten in Assoziation miteinander speichert, wobei die Anweisungssatzdaten einen Satz der Anweisung angeben, der durch die Sprachdaten angegeben wird, die von der Empfangseinheit von der Endgeräteinrichtung empfangen werden und die von der Spracherkennungseinheit erkannt werden, und
die Vorschlagssatzerfassungseinheit (127) so angepasst ist, dass sie Aufforderungssatzdaten erzeugt, die von der Sendeeinheit an eine der Vielzahl von Endgeräteinrichtungen zu übertragen sind, wobei in der Speichereinrichtung gespeicherte Anweisungssatzdaten in Assoziation mit Attributdaten verwendet werden, die durch die Empfangseinheit von einer der Vielzahl von Endgeräteinrichtungen empfangen werden.

6. Servereinrichtung (12) nach Anspruch 5, wobei
die Speichersteuereinheit (125) so angepasst ist, dass sie bewirkt, dass die Speichereinrichtung Anweisungssatzdaten und Zeitdaten in Assoziation miteinander speichert, wobei die Zeitdaten den Zeitpunkt der Ausgabe einer durch die Anweisungssatzdaten angegebenen Anweisung angeben, und
die Vorschlagssatzerfassungseinheit (127) so angepasst ist, dass sie Anweisungssatzdaten spezifiziert, die eine Anweisung angeben, die im Laufe der Zeit basierend auf einer Vielzahl von Elementen von in der Speichereinrichtung gespeicherten Anweisungssatzdaten und Zeitdaten, die in Assoziation mit der Vielzahl von Elementen von Anweisungssatzdaten gespeichert sind, immer häufiger verwendet wird, und Aufforderungssatzdaten erzeugt, die von der Sendeeinheit unter Verwendung der spezifizierten Anweisungssatzdaten zu übertragen sind.

7. Servereinrichtung (12) nach Anspruch 5 oder 6, wobei
die Speichersteuereinheit (125) so angepasst ist, dass sie bewirkt, dass die Speichereinrichtung Anweisungssatzdaten und Endgerätidentifikationsdaten in Assoziation miteinander speichert, wobei die Anweisungssatzdaten von der Spracherkennungseinheit aus Sprachdaten erzeugt werden, und die Endgerätidentifikationsdaten eine Endgeräteinrichtung identifizieren, welche die Sprachdaten übertragen hat, und
die Vorschlagssatzerfassungseinheit (127) so angepasst ist, dass sie als Aufforderungssatzdaten, die von der Sendeeinheit zu einer der Vielzahl von Endgeräteinrichtungen zu übertragen sind, Aufforderungssatzdaten erzeugt, die eine Anweisung anfordern, die keine vorbestimmte Ähnlichkeit mit einer Anweisung aufweist, die durch Anweisungssatzdaten angegeben ist, die in der Speichereinrichtung in Assoziation mit Endgerätidentifikationsdaten gespeichert sind, welche die eine der Vielzahl von Endgeräteinrichtungen identifizieren.

8. Servereinrichtung (12) nach Anspruch 4, die weiter Folgendes umfasst:
eine Relevanzdatenerfassungseinheit, die so angepasst ist, dass sie verarbeitungsübergreifende Relevanzdaten erfasst, die eine Größenordnung der Relevanz zwischen zwei beliebigen Verarbeitungsobjekten angeben, die in eine Vielzahl von Verarbeitungselementen eingeschlossen sind, die von der Endgeräteinrichtung ausgeführt werden können, wobei
die Empfangseinheit (121) so angepasst ist, dass sie die von der Endgeräteinrichtung übertragenen Sprachdaten als Attributdaten empfängt,
die Spracherkennungseinheit (122) so angepasst ist, dass sie eine durch die Attributdaten angegebene Anweisung erkennt,
die Verarbeitungs-ID-Erzeugungseinheit (123) so angepasst ist, dass sie Verarbeitungsidentifikationsdaten erzeugt, die ein Verarbeitungsobjekt identifizieren, das der durch die Attributdaten angegebenen Anweisung entspricht, und
die Vorschlagssatzerfassungseinheit (127) so angepasst ist, dass sie ein Verarbeitungsobjekt aus der Vielzahl von Verarbeitungsobjekten basierend auf einer Größenordnung der Relevanz für das Verarbeitungsobjekt auswählt, das der durch die Attributdaten angegebenen Anweisung entspricht, und Aufforderungssatzdaten erfasst, die einen Satz angeben, der eine Anweisung für das ausgewählte eine Verarbeitungsobjekt als Aufforderungssatzdaten anfordert, die dem durch die Attributdaten angegebenen Attribut entsprechen, wobei die Größenordnung durch die verarbeitungsübergreifenden Relevanzdaten angegeben werden.

9. Programm, das bewirkt, dass ein Computer Folgendes ausführt:
das Erfassen mittels einer Endgeräteinrichtung von Attributdaten, die ein Attribut eines Benutzers oder einer den Benutzer umgebenden Umgebung angeben;
das Empfangen von einer Servereinrichtung von Aufforderungssatzdaten, die einen Satz angeben, der den Benutzer dazu auffordert, eine Sprachanweisung zu erteilen und die den durch Attributdaten angegebenen Attributen entsprechen, wobei die Aufforderungssatzdaten von der Servereinrichtung als Antwort auf eine Übertragung der Attributdaten zur Servereinrichtung übertragen und erzeugt werden, wobei Elemente der Attributdaten und Elemente von Anweisungssatzdaten verwendet werden, die in Assoziation mit solchen Elementen von Attributdaten gespeichert sind;
das Anzeigen durch die Endgeräteinrichtung des Satzes, der durch die Aufforderungssatzdaten auf einer Anzeigeeinrichtung angegeben wird, wenn ein vorbestimmter Zeitraum verstreicht, ohne dass vom Benutzer eine Sprachanweisung erteilt wird, seitdem die Endgeräteinrichtung begann, auf die Sprachanweisung durch den Benutzer zu warten;
das Erfassen durch die Endgeräteinrichtung von Sprachdaten, die eine Äußerung angeben, die vom Benutzer als Reaktion darauf gemacht wird, dass die Anzeigeeinrichtung den Satz anzeigt, der durch die Aufforderungssatzdaten angegeben wird;
das Empfangen von einer Servereinrichtung von Verarbeitungsidentifikationsdaten, die eine Verarbeitung entsprechend einer durch die Sprachdaten angegebenen Anweisung identifizieren;
das Identifizieren einer Verarbeitung basierend auf den Verarbeitungsidentifikationsdaten und
das Übertragen der Attributdaten und der Sprachdaten zur Servereinrichtung, wobei
die Verarbeitungsidentifikationsdaten als Antwort auf eine Übertragung der Sprachdaten durch die Sendeeinheit empfangen werden.

## Revendications

1. Appareil terminal (11), comprenant :
une unité d'acquisition d'attribut (111) adaptée pour acquérir des données d'attribut indiquant un attribut d'un utilisateur ou d'un environnement entourant l'utilisateur ;
une unité d'acquisition de phrase de suggestion (113) adaptée pour recevoir, à partir d'un appareil serveur, des données de phrase d'invite indiquant une phrase qui invite l'utilisateur à délivrer une instruction vocale et correspondant aux attributs indiqués par des données d'attribut, les données de phrase d'invite étant transmises depuis l'appareil serveur en réponse à la transmission des données d'attribut à l'appareil serveur et étant générées en utilisant des éléments des données d'attribut et des éléments de données de phrase d'instruction stockés en association avec de tels éléments de données d'attribut ;
une unité de commande d'affichage (114) adaptée pour amener un appareil d'affichage à afficher la phrase indiquée par les données de phrase d'invite lorsqu'une période prédéterminée s'est écoulée sans délivrance d'une instruction vocale par l'utilisateur depuis que l'appareil terminal a commencé à attendre l'instruction vocale par l'utilisateur ;
une unité d'acquisition de données vocales (115) adaptée pour acquérir des données vocales indiquant des paroles prononcées par l'utilisateur en réponse à l'appareil d'affichage affichant la phrase indiquée par les données de phrase d'invite ;
une unité d'acquisition d'ID de traitement (116) adaptée pour recevoir, à partir d'un appareil serveur, des données d'identification de traitement identifiant un traitement correspondant à une instruction indiquée par les données vocales ;
une unité d'exécution de traitement (117) adaptée pour exécuter le traitement identifié par les données d'identification de traitement ; et
une unité de transmission (112) adaptée pour transmettre les données d'attribut et les données vocales à l'appareil serveur (12), dans lequel
l'unité d'acquisition d'ID de traitement (116) est adaptée pour recevoir les données d'identification de traitement qui sont transmises depuis l'appareil serveur en réponse à la transmission des données vocales par l'unité de transmission.

2. Appareil terminal (11) selon la revendication 1, dans lequel
l'unité de transmission (112) est adaptée pour transmettre, à l'appareil serveur, des données d'identification de phrase d'invite identifiant les données de phrase d'invite indiquant la phrase qui est affichée par l'appareil d'affichage lorsque les données vocales sont acquises par l'unité d'acquisition de données vocales, et
l'unité d'acquisition d'ID de traitement (116) est adaptée pour recevoir les données d'identification de traitement qui sont transmises depuis l'appareil serveur en réponse à la transmission des données vocales et des données d'identification de phrase d'invite, les données d'identification de traitement identifiant le traitement correspondant à une combinaison de l'instruction indiquée par les données vocales et de la phrase identifiée par les données d'identification de phrase d'invite.

3. Appareil terminal (11) selon la revendication 1 ou 2, dans lequel
l'unité d'acquisition d'attribut (111) est adaptée pour acquérir les données vocales indiquant les paroles prononcées par l'utilisateur en tant que données d'attribut.

4. Appareil serveur (12), comprenant :
une unité de réception (121) adaptée pour recevoir des données d'attribut depuis un appareil terminal, les données d'attribut indiquant un attribut d'un utilisateur de l'appareil terminal ou un attribut d'un environnement entourant l'utilisateur ;
une unité de commande de stockage (125) adaptée pour stocker les données d'attribut reçues par l'unité de réception (121) en association avec des données de phrase d'instruction qui ont été générées en utilisant des données vocales reçues par l'unité de réception (121) et des données temporelles indiquant l'instant de délivrance d'une instruction indiquée par les données de phrase d'instruction ;
une unité d'acquisition de phrase de suggestion (127) adaptée pour générer des données de phrase d'invite indiquant une phrase qui invite l'utilisateur à délivrer une instruction vocale lorsqu'une période prédéterminée s'est écoulée sans délivrance d'une instruction vocale par l'utilisateur depuis que l'appareil terminal a commencé à attendre l'instruction vocale par l'utilisateur, dans lequel l'unité d'acquisition de phrase de suggestion (127) est adaptée pour acquérir des données de phrase d'invite correspondant aux attributs indiqués par les données d'attribut reçues par l'unité de réception (121) en utilisant des éléments des données d'attribut et des éléments de données de phrase d'instruction stockés en association avec de tels éléments de données d'attribut ;
une unité de transmission (124) adaptée pour transmettre les données de phrase d'invite à l'appareil terminal en réponse à la réception des données d'attribut par l'unité de réception ; dans lequel
l'unité de réception est adaptée pour recevoir des données vocales qui sont transmises depuis l'appareil terminal après la transmission des données de phrase d'invite par l'unité de transmission,
une unité de reconnaissance vocale (122) adaptée pour reconnaître une instruction indiquée par les données vocales ; et
une unité de génération d'ID de traitement (116) adaptée pour générer des données d'identification de traitement identifiant un traitement correspondant à l'instruction, et
dans lequel l'unité de transmission (124) est adaptée pour transmettre les données d'identification de traitement à l'appareil terminal en réponse aux données vocales reçues par l'unité de réception.

5. Appareil serveur (12) selon la revendication 4, comprenant en outre
une unité de commande de stockage (125), dans lequel
l'unité de réception (121) est adaptée pour recevoir les données d'attribut et les données vocales depuis chacun d'une pluralité d'appareils terminaux,
l'unité de commande de stockage (125) est adaptée pour amener un appareil de stockage à stocker les données d'attribut reçues par l'unité de réception depuis chaque appareil terminal et des données de phrase d'instruction en association les unes avec les autres, les données de phrase d'instruction indiquant une phrase de l'instruction qui est indiquée par les données vocales reçues par l'unité de réception depuis l'appareil terminal et qui est reconnue par l'unité de reconnaissance vocale, et
l'unité d'acquisition de phrase de suggestion (127) est adaptée pour générer des données de phrase d'invite à transmettre depuis l'unité de transmission à l'un de la pluralité d'appareils terminaux en utilisant des données de phrase d'instruction qui sont stockées dans l'appareil de stockage en association avec des données d'attribut reçues par l'unité de réception depuis l'un de la pluralité d'appareils terminaux.

6. Appareil serveur (12) selon la revendication 5, dans lequel
l'unité de commande de stockage (125) est adaptée pour amener l'appareil de stockage à stocker des données de phrase d'instruction et des données temporelles en association les unes avec les autres, les données temporelles indiquant un instant de délivrance d'une instruction indiquée par les données de phrase d'instruction, et
l'unité d'acquisition de phrase de suggestion (127) est adaptée pour spécifier des données de phrase d'instruction indiquant une instruction qui est utilisée de plus en plus fréquemment à mesure que le temps s'écoule sur la base d'une pluralité d'éléments de données de phrase d'instruction stockées dans l'appareil de stockage et de données temporelles stockées en association avec la pluralité d'éléments de données de phrase d'instruction, et générer des données de phrase d'invite à transmettre depuis l'unité de transmission en utilisant les données de phrase d'instruction spécifiées.

7. Appareil serveur (12) selon la revendication 5 ou 6, dans lequel
l'unité de commande de stockage (125) est adaptée pour amener l'appareil de stockage à stocker des données de phrase d'instruction et des données d'identification de terminal en association les unes avec les autres, les données de phrase d'instruction étant générées par l'unité de reconnaissance vocale à partir de données vocales, et les données d'identification de terminal identifiant un appareil terminal qui a transmis les données vocales, et
l'unité d'acquisition de phrase de suggestion (127) est adaptée pour générer, en tant que données de phrase d'invite à transmettre depuis l'unité de transmission à l'un de la pluralité d'appareils terminaux, des données de phrase d'invite sollicitant une instruction qui ne porte pas une similarité prédéterminée avec une instruction indiquée par des données de phrase d'instruction qui sont stockées dans l'appareil de stockage en association avec des données d'identification de terminal identifiant l'un de la pluralité d'appareils terminaux.

8. Appareil serveur (12) selon la revendication 4, comprenant en outre
une unité d'acquisition de données de pertinence adaptée pour acquérir des données de pertinence inter-traitement indiquant une grandeur de pertinence entre deux éléments arbitraires de traitement inclus parmi une pluralité d'éléments de traitement qui peuvent être exécutés par l'appareil terminal, dans lequel
l'unité de réception (121) est adaptée pour recevoir les données vocales transmises depuis l'appareil terminal en tant que données d'attribut,
l'unité de reconnaissance vocale (122) est adaptée pour reconnaître une instruction indiquée par les données d'attribut,
l'unité de génération d'ID de traitement (123) est adaptée pour générer des données d'identification de traitement identifiant un élément de traitement correspondant à l'instruction indiquée par les données d'attribut, et
l'unité d'acquisition de phrase de suggestion (127) est adaptée pour sélectionner un élément de traitement parmi la pluralité d'éléments de traitement sur la base d'une grandeur de pertinence pour l'élément de traitement correspondant à l'instruction indiquée par les données d'attribut, et acquérir des données de phrase d'invite indiquant une phrase sollicitant une instruction pour l'élément sélectionné de traitement en tant que données de phrase d'invite correspondant à l'attribut indiqué par les données d'attribut, la grandeur étant indiquée par les données de pertinence inter-traitement.

9. Programme pour amener un ordinateur à exécuter :
l'acquisition, par un appareil terminal, de données d'attribut indiquant un attribut d'un utilisateur ou d'un environnement entourant l'utilisateur ;
la réception, à partir d'un appareil serveur, de données de phrase d'invite indiquant une phrase qui invite l'utilisateur à délivrer une instruction vocale et correspondant aux attributs indiqués par des données d'attribut, les données de phrase d'invite étant transmises depuis l'appareil serveur en réponse à la transmission des données d'attribut à l'appareil serveur et étant générées en utilisant des éléments des données d'attribut et des éléments de données de phrase d'instruction stockés en association avec de tels éléments de données d'attribut ;
l'affichage, par l'appareil terminal, de la phrase indiquée par les données de phrase d'invite sur un appareil d'affichage lorsqu'une période prédéterminée s'est écoulée sans délivrance d'une instruction vocale par l'utilisateur depuis que l'appareil terminal a commencé à attendre l'instruction vocale par l'utilisateur ;
l'acquisition, par l'appareil terminal, de données vocales indiquant des paroles prononcées par l'utilisateur en réponse à l'appareil d'affichage affichant la phrase indiquée par les données de phrase d'invite ;
la réception, à partir d'un appareil serveur, de données d'identification de traitement identifiant un traitement correspondant à une instruction indiquée par les données vocales ;
l'identification d'un traitement sur la base des données d'identification de traitement ; et
la transmission des données d'attribut et des données vocales à l'appareil serveur, dans lequel
les données d'identification de traitement sont reçues en réponse à la transmission des données vocales par l'unité de transmission.
